# EUROPEAN PATENT SPECIFICATION

(11) **EP 1 180 108 B1**
(45) Date of publication and mention of the grant of the patent: **27.08.2003**
(21) Application number: 00937665.8
(22) Date of filing: 22.05.2000
(51) Int. Cl.: C07F 15/00

(54) **IMIDAZOLIDINE-BASED METAL CARBENE METATHESIS CATALYSTS**
IMIDAZOLIDIN ENTHALTENDE METALLCARBEN-KATALYSATOREN FÜR DIE METATHESE
CATALYSEURS DE METATHESE DE CARBENE METALLIQUE A BASE D'IMIDAZOLIDINE

(30) Priority: 24.05.1999 US 135493 P; 07.07.1999 US 142853 P
(43) Date of publication of application: 20.02.2002
(73) Proprietor: CALIFORNIA INSTITUTE OF TECHNOLOGY, Pasadena, California 91125 (US)
(72) Inventor: GRUBBS, Robert, H., South Pasadena, CA 91030 (US); SCHOLL, Matthias, Arcadia, CA 91006 (US)
(74) Representative: Andrae, Steffen, Dr.
(86) International application number: US0014048
(87) International publication number: WO00071554

(56) References cited:
- US-A- 5 831 108
- CHEMICAL ABSTRACTS, vol. 131, no. 21, 22 November 1999 Columbus, Ohio, US; abstract no. 285987k, SCHOLL, M. et al.: "Synthesis and Activity of a New Generation of Ruthenium-Based Olefin Metathesis Catalysts Coordinated with 1,3-Dimesityl-4,5- -dihydroimidazol-2-ylidene Ligands" column 1, XP002901392; & Org. Lett., vol. 1, no. 6, 1999, pages
- CHEMICAL ABSTRACTS, vol. 131, no. 22, 29 November 1999 Columbus, Ohio, US; abstract no. 299544a, WESKAMP, T.: "Highly active ruthenium catalysts for olefin metathesis: the synergy of N-Heterocyclic carbenes and coordinatively labile ligands" page 567; column 1, XP002901393; & Angew. Chem., Int. Ed., vol. 38, no. 16, 1999, pages 2416-2419,
- CHEMICAL ABSTRACTS, vol. 130, no. 4, 25 January 1999 Columbus, Ohio, US; abstract no. 38522n, WESKAMP, T. et al.: "A novel class or ruthenium catalysts for olefin metathesis" page 709; column 2, XP002901394; & Angew. Chem., Int. Ed., vol. 37, no. 18, 1998, pages 2490-2493,

## Description

The U.S. Government has certain rights in this invention pursuant to Grant No. GM31332 awarded by the National Institute of Health.

### BACKGROUND

Metathesis catalysts have been previously described by for example, United States Patents Nos. 5,312,940, 5,342,909, 5,728,917, 5,750,815, 5,710,298, and 5,831,108 and PCT Publications WO 97/20865 and WO 97/29135. These publications describe well-defined single component ruthenium or osmium catalysts that possess several advantageous properties. For example, these catalysts are tolerant to a variety of functional groups and generally are more active than previously known metathesis catalysts. In an unexpected and surprising result, the inclusion of an imidazolidine ligand in these metal-carbene complexes has been found to dramatically improve the already advantageous properties of these catalysts. For example, the imidazolidine-based catalysts of the present invention exhibit increased activity and selectivity not only in ring closing metathesis ("RCM") reactions, but also in other metathesis reactions including cross metathesis ("CM") reactions, reactions of acyclic olefins, and ring opening metathesis polymerization ("ROMP") reactions.

### SUMMARY

The present invention relates to novel metathesis catalysts with an imidazolidine-based ligand and to methods for making and using the same. The inventive catalysts are of the formula 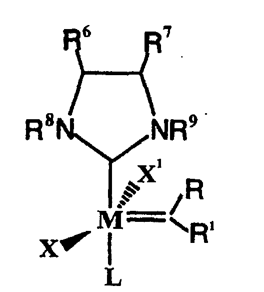 wherein:
M is ruthenium or osmium;
X and X¹ are each independently an anionic ligand;
L is a neutral electron donor ligand; and,
R, R¹ R⁶, R⁷, R⁸, and R⁹ are each independently hydrogen or a substituent selected from the group consisting of C₁-C₂₀ alkyl, C₂-C₂₀ alkenyl, C₂-C₂₀ alkynyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthiol, aryl thiol, C₁-C₂₀ alkylsulfonyl and C₁-C₂₀ alkylsulfinyl. Optionally, each of the R, R¹ R⁶, R⁷, R⁸, and R⁹ substituent group may be substituted with one or more moieties selected from the group consisting of C₁-C₁₀ alkyl, C₁-C₁₀ alkoxy, and aryl which in turn may each be further substituted with one or more groups selected from a halogen, a C₁-C₅ alkyl, C₁-C₅ alkoxy, and phenyl. Moreover, any of the catalyst ligands may further include one or more functional groups. Examples of suitable functional groups include but are not limited to: hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen. The inclusion of an imidazolidine ligand to the previously described ruthenium or osmium catalysts has been found to dramatically improve the properties of these complexes. Imidazolidine ligands are also referred to as 4,5-dihydro-imidazole-2-ylidene ligands. Because the imidazolidine-based complexes are extremely active, the amount of catalysts that is required is significantly reduced.

### BRIEF DESCRIPTION OF THE DRAWINGS

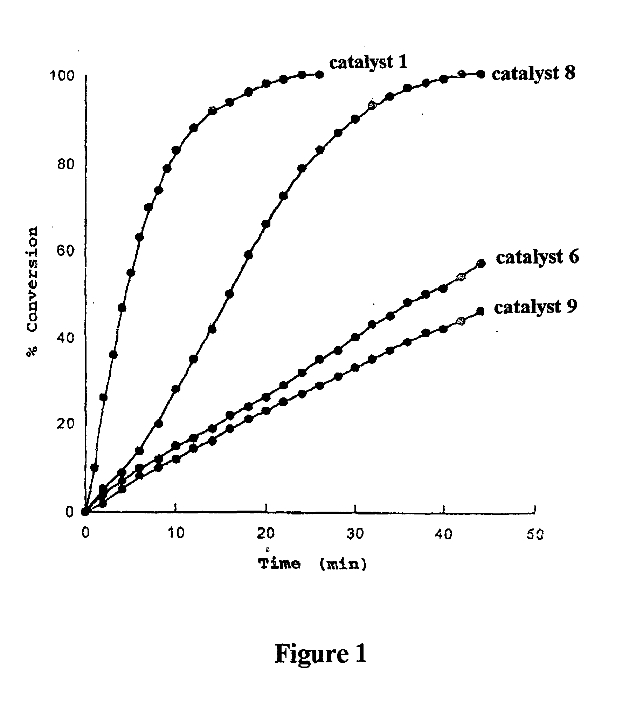

Figure 1 compares the ROMP activity of COD of representative catalysts of the present invention with previously described metathesis catalysts as determined by ¹H NMR spectroscopy. The reactions were performed at 20°C with CD₂Cl₂ as solvent, a monomer/catalyst ratio of 300, and a catalyst concentration of 0.5 mM.

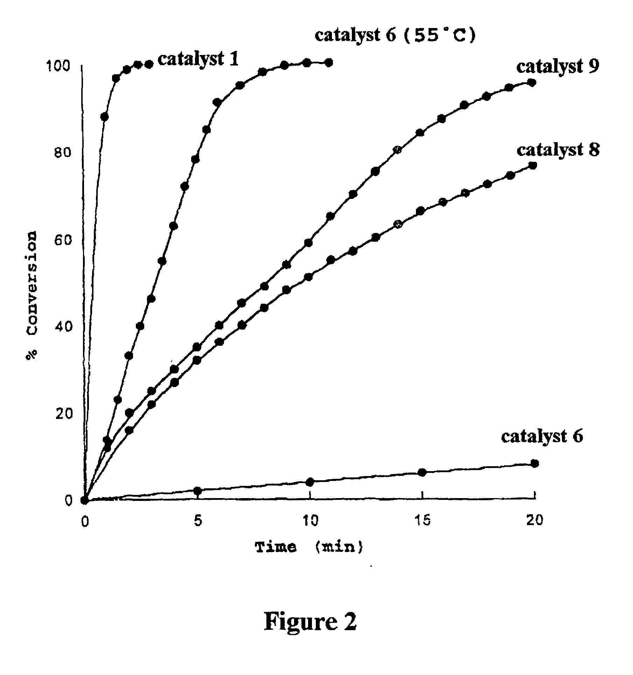

Figure 2 compares the ROMP activity of COE of representative catalysts of the present invention with previously described metathesis catalysts as determined by ¹H NMR spectroscopy. The reactions were performed at 20°C with CD₂Cl₂ as solvent, a monomer/catalyst ratio of 300, and a catalyst concentration of 0.5 mM.

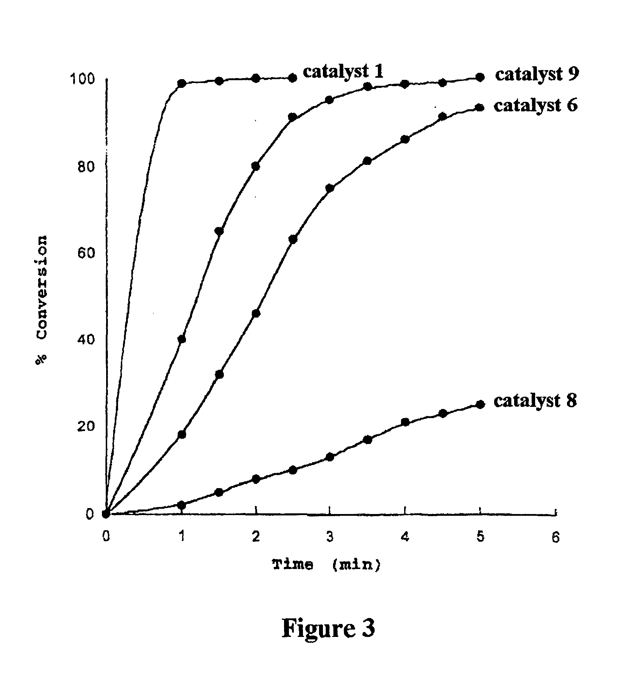

Figure 3 compares the ROMP activity of COD at an elevated temperature of representative catalysts of the present invention with previously described metathesis catalysts as determined by ¹H NMR spectroscopy. The reactions were performed at 55°C with CD₂Cl₂ as solvent, a monomer/catalyst ratio of 300, and a catalyst concentration of 0.5 mM.

### DETAILED DESCRIPTION OF THE PREFERRED EMBODIMENTS

The present invention generally relates to ruthenium and osmium carbene catalysts for use in olefin metathesis reactions. More particularly, the present invention relates to imidazolidine-based ruthenium and osmium carbene catalysts and to methods for making and using the same. The terms "catalyst" and "complex" herein are used interchangeably.

Unmodified ruthenium and osmium carbene complexes have been described in United States Patents Nos. 5,312,940, 5,342,909, 5,728,917, 5,750,815, and 5,710,298. The ruthenium and osmium carbene complexes disclosed in these patents all possess metal centers that are formally in the +2 oxidation state, have an electron count of 16, and are penta-coordinated. These catalysts are of the general formula 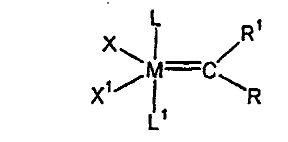 wherein:
M is ruthenium or osmium;
X and X¹ are each independently any anionic ligand;
L and L¹ are each independently any neutral electron donor ligand;
R and R¹ are each independently hydrogen or a substituent selected from the group consisting of C₁-C₂₀ alkyl, C₂-C₂₀ alkenyl, C₂-C₂₀ alkynyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthiol, aryl thiol, C₁-C₂₀ alkylsulfonyl and C₁-C₂₀ alkylsulfinyl. Optionally, each of the R or R¹ substituent group may be substituted with one or more moieties selected from the group consisting of C₁-C₁₀ alkyl, C₁-C₁₀ alkoxy, and aryl which in turn may each be further substituted with one or more groups selected from a halogen, a C₁-C₅ alkyl, C₁-C₅ alkoxy, and phenyl. Moreover, any of the catalyst ligands may further include one or more functional groups. Examples of suitable functional groups include but are not limited to: hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

Imidazolin-2-ylidene complexes of Ru and their synthesis via reaction of imidazolin-2-ylidene with [RuCl₂(PPh₃)₂(=CHPh)], as well as their application as catalysts for olefin metathesis are described in CHEMICAL ABSTRACTS, vol. 130, no. 4, 25 January 1999 Columbus Ohio; abstract no.38522n, WESKAMP, T. et al.: "A novel class of ruthenium catalysts for olefin metathesis" page 709, col. 2; & Angew.Chem., Int.Ed., vol.37, no.18, 1998, pages 2490-2493.

The catalysts of the present invention are as described above except that L¹ is an unsubstituted or substituted imidazolidine, 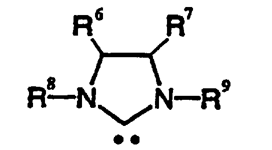 resulting in a complex of the general formula 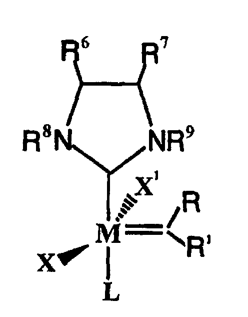 wherein:
R⁶, R⁷, R⁸, and R⁹ are each independently hydrogen or a substituent selected from the group consisting of C₁-C₂₀ alkyl, C₂-C₂₀ alkenyl, C₂-C₂₀ alkynyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthiol, aryl thiol, C₁-C₂₀ alkylsulfonyl and C₁-C₂₀ alkylsulfinyl. Imidazolidine ligands are also referred to as 4,5-dihydro-imidazole-2-ylidene ligands.

In a preferred embodiment, M is ruthenium.

In preferred embodiments of the inventive catalysts, the R substituent is hydrogen and the R¹ substituent is selected from the group consisting of C₁-C₂₀ alkyl, C₂-C₂₀ alkenyl, and aryl. In even more preferred embodiments, the R¹ substituent is phenyl or vinyl, optionally substituted with one or more moieties selected from the group consisting of C₁-C₅ alkyl, C₁-C₅ alkoxy, phenyl, and a functional group. In especially preferred embodiments, R¹ is phenyl or vinyl substituted with one or more moieties selected from the group consisting of chloride, bromide, iodide, fluoride, -NO₂, -NMe₂, methyl, methoxy and phenyl. In the most preferred embodiments, the R' substituent is phenyl or - C=C(CH₃)₂.

In preferred embodiments of the inventive catalysts, L is selected from the group consisting of phosphine, sulfonated phosphine, phosphite, phosphinite, phosphonite, arsine, stibine, ether, amine, amide, imine, sulfoxide, carboxyl, nitrosyl, pyridine, and thioether. In more preferred embodiments, L is a phosphine of the formula PR³R⁴R⁵, where R³, R⁴, and R⁵ are each independently aryl or C₁-C₁₀ alkyl, particularly primary alkyl, secondary alkyl or cycloalkyl. In the most preferred embodiments, L is each selected from the group consisting of -P(cyclohexyl)₃, -P(cyclopentyl)₃, -P(isopropyl)₃, and -P(phenyl)₃.

In preferred embodiments of the inventive catalysts, X and X¹ are each independently hydrogen, halide, or one of the following groups: C₁-C₂₀ alkyl, aryl, C₁-C₂₀ alkoxide, aryloxide, C₃-C₂₀ alkyldiketonate, aryldiketonate, C₁-C₂₀ carboxylate, arylsulfonate, C₁-C₂₀ alkylsulfonate, C₁-C₂₀ alkylthiol, aryl thiol, C₁-C₂₀ alkylsulfonyl, or C₁-C₂₀ alkylsulfinyl. Optionally, X and X¹ may be substituted with one or more moieties selected from the group consisting of C₁-C₁₀ alkyl, C₁-C₁₀ alkoxy, and aryl which in turn may each be further substituted with one or more groups selected from halogen, C₁-C₅ alkyl, C₁-C₅ alkoxy, and phenyl. In more preferred embodiments, X and X¹ are halide, benzoate, C₁-C₅ carboxylate, C₁-C₅ alkyl, phenoxy, C₁-C₅ alkoxy, C₁-C₅ alkylthiol, aryl thiol, aryl, and C₁-C₅ alkyl sulfonate. In even more preferred embodiments, X arid X¹ are each halide, CF₃CO₂, CH₃CO₂, CFH₂CO₂, (CH₃)₃CO, (CF₃)₂(CH₃)CO, (CF₃)(CH₃)₂CO, PhO, MeO, EtO, tosylate, mesylate, or trifluoromethanesulfonate. In the most preferred embodiments, X and X¹ are each chloride.

In preferred embodiments of the inventive catalysts, R⁶ and R⁷ are each independently hydrogen, phenyl, or together form a cycloalkyl or an aryl optionally substituted with one or more moieties selected from the group consisting of C₁-C₁₀ alkyl, C₁-C₁₀ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen; and R⁸ and R⁹ are each is independently C₁-C₁₀ alkyl or aryl optionally substituted with C₁-C₅ alkyl, C₁-C₅ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

In more preferred embodiments, R⁶ and R⁷ are both hydrogen or phenyl, or R⁶ and R⁷ together form a cycloalkyl group; and R⁸ and R⁹ are each either substituted or unsubstituted aryl. Without being bound by theory, it is believed that bulkier R⁸ and R⁹ groups result in catalysts with improved characteristics such as thermal stability. In especially preferred embodiments, R⁸ and R⁹ are the same and each is independently of the formula 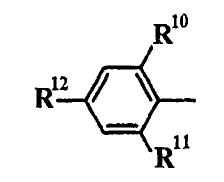 wherein:
R¹⁰, R¹¹, and R¹² are each independently hydrogen, C₁-C₁₀ alkyl, C₁-C₁₀ alkoxy, aryl, or a functional group selected from hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen. In especially preferred embodiments, R¹⁰, R¹¹, and R¹² are each independently selected from the group consisting of hydrogen, methyl, ethyl, propyl, isopropyl, hydroxyl, and halogen. In the most preferred embodiments, R¹⁰, R¹¹, and R¹² are the same and are each methyl.

Examples of the most preferred embodiments of the present invention include: 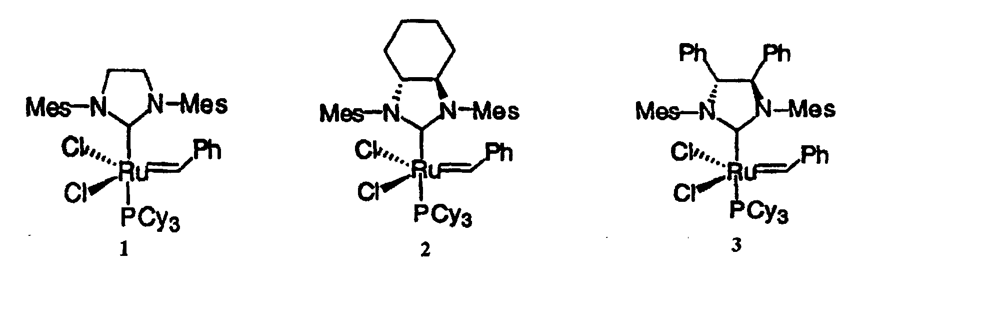 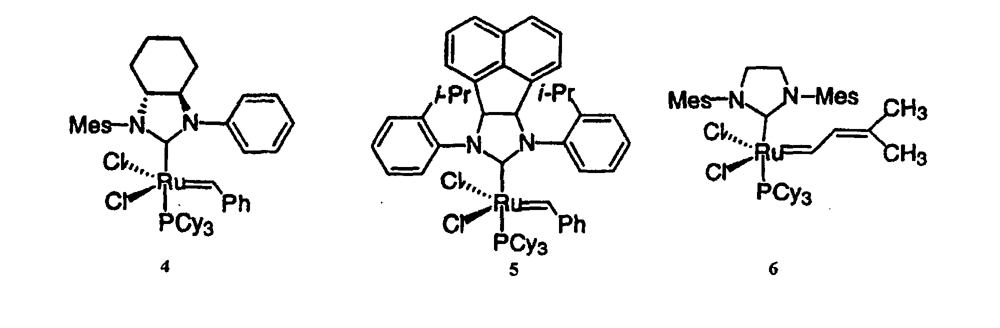 wherein Mes is 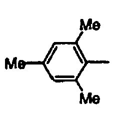 (also known as "mesityl"); *i*-Pr is isopropyl; and PCy₃ is -P(cyclohexyl)₃.

### Synthesis

In general, the catalysts of the present invention are made by contacting an imidazolidine with a previously described ruthenium/osmium catalyst 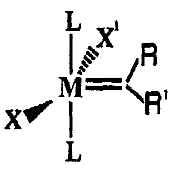 whereby the imidazolidine replaces one of the L ligands. The imidazolidine may be made using any suitable method.

In preferred embodiments, the method for making the inventive catalysts comprises contacting an imidazolidine of the general formula 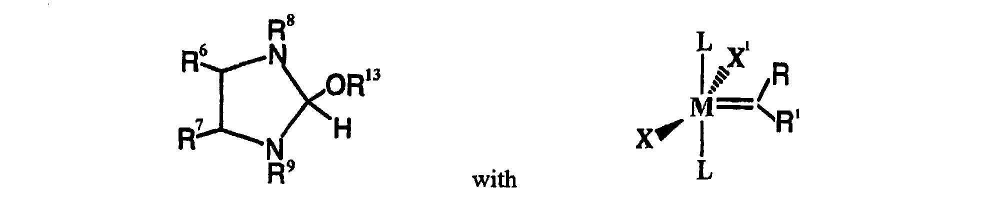 wherein:
M is ruthenium or osmium;
X and X¹ are each independently an anionic ligand;
L is a neutral electron donor ligand;
R, R¹ R⁶, R⁷, R⁸, and R⁹ are each independently hydrogen or a substituent selected from the group consisting of C₁-C₂₀ alkyl, C₂-C₂₀ alkenyl, C₂-C₂₀ alkynyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthiol, aryl thiol, C₁-C₂₀ alkylsulfonyl and C₁-C₂₀ alkylsulfinyl, the substituent optionally substituted with one or more moieties selected from the group consisting of C₁-C₁₀ alkyl, C₁-C₁₀ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen; and,
R¹³ is C₁-C₂₀ alkyl or aryl.

If desired, the contacting step may be performed in the presence of heat. Typically, the replacement reaction whereby the imidazolidine displaces one of the L ligands occurs in about 10 minutes in the presence of heat.

The imidazolidine may be synthesized by contacting a diamine with a salt to form an imidazolium salt; and then contacting the imidazolium salt with a base (preferably an alkyloxide) to make the imidazolidine in a form suitable for reacting with

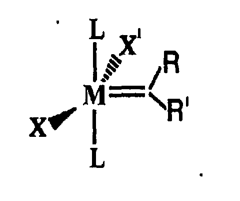

One embodiment for the synthetic method is as follows. First, a diketone is contacted with a primary amine (R-NH₂ wherein R⁸ = R⁹) or amines (R⁸-NH₂ and R⁹-NH₂) to form a diimine which is then reduced to form a diamine.

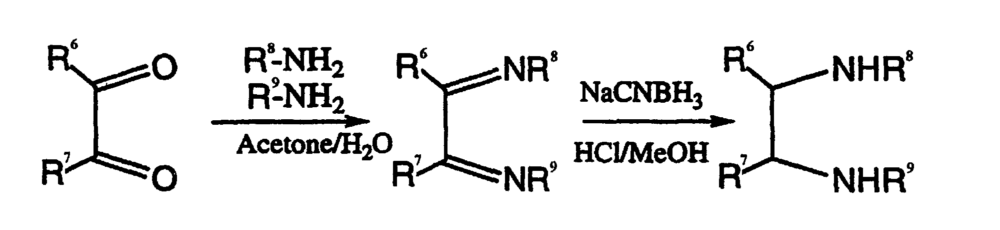

In preferred embodiments, R⁸ and R⁹ are the same and are each independently C₁-C₁₀ alkyl or aryl optionally substituted with C₁-C₅ alkyl, C₁-C₅ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

When R⁶ and R⁷ together form a cycloalkyl and R⁸ and R⁹ are the same, the following alternate protocol may be used to make the diamine intermediate of the present invention: 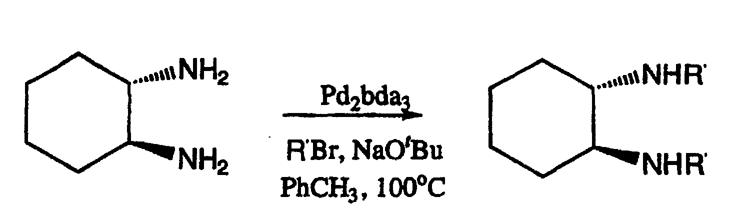 wherein R' represents both R⁸ and R⁹ since R⁸ = R⁹. Because a number of optically active primary cycloalkyldiamines are commercially available, this protocol may be used to synthesize optically active imidazolidine ligands. In addition, chiral metathesis complexes are also possible.

The diamine intermediate is used to prepare an imidazolium salt. In one embodiment, ammonium tetrafluoroborate may be used.

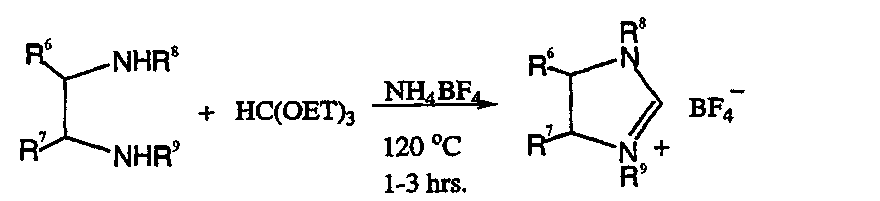

The resulting imidazolium salt is then reacted with a base to make the imidazolidine.

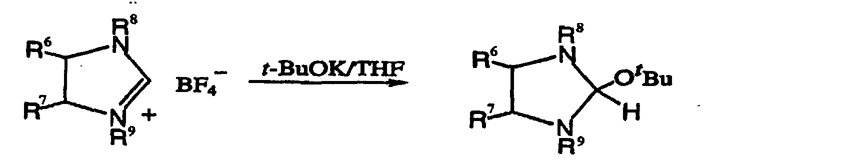

Representative examples of suitable bases include the *t*-BuOK/THF and MeONa/MeOH.

### Metathesis Reactions

The catalysts of the present invention may be used for any metathesis reaction (*i.e*. ring opening metathesis polymerization, ring closing metathesis, cross metathesis, etc.) by contacting the inventive catalysts with an appropriate olefin. Any olefin may be used and as used herein an olefin is a substituted or unsubstituted alkene and is any compound including cyclic compounds that possess a carbon-carbon double bond. Unlike previously described metathesis catalysts, the inventive complexes can initiate reactions involving even highly substituted olefins such as tri and tetra substituted olefins (*e.g.*, R¹R²C=CR³R⁴ wherein R¹, R², R³, and R⁴ are independently each a hydrogen or a non-hydrogen moiety) and olefins bearing electron withdrawing groups.

In general, the method for performing a metathesis reaction comprises contacting a suitable olefin with a catalyst of the present invention. To date, the most widely used catalysts for ROMP and other metathesis reactions are 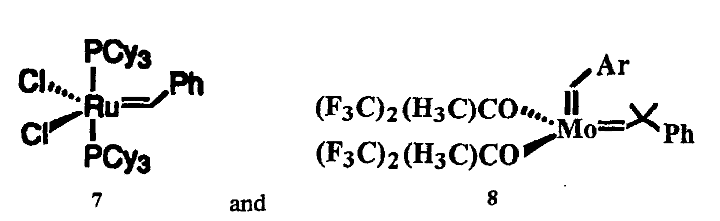 wherein PCy₃ is -P(cyclohexyl)₃ and Ar is C₆H₃-2,6-(^{*i*}PR). The molybdenum catalyst 8 displays much higher activity than the ruthenium catalyst 7, thus permitting polymerization of many sterically hindered or electronically deactivated cyclic olefins. However, the ruthenium catalyst **7** is stable under ambient conditions and tolerates a much larger range of protic and polar functional groups such as alcohols, acids and aldehydes. The catalysts of the present invention combine the best features of both complexes **7** and **8**. In particular, the inventive imidazolidine catalysts rival and often exceed the activity of molybdenum complex **8** while maintaining the stability and functional group compatibility of ruthenium complex **7**.

The enhanced properties of the inventive catalysts are illustrated by a series of experiments. For example, Table 1 contains representative results comparing the activities of two representative catalysts (**1** and **2**) of the present invention with complex **7** in several ring closing metathesis reactions with an acyclic olefin.

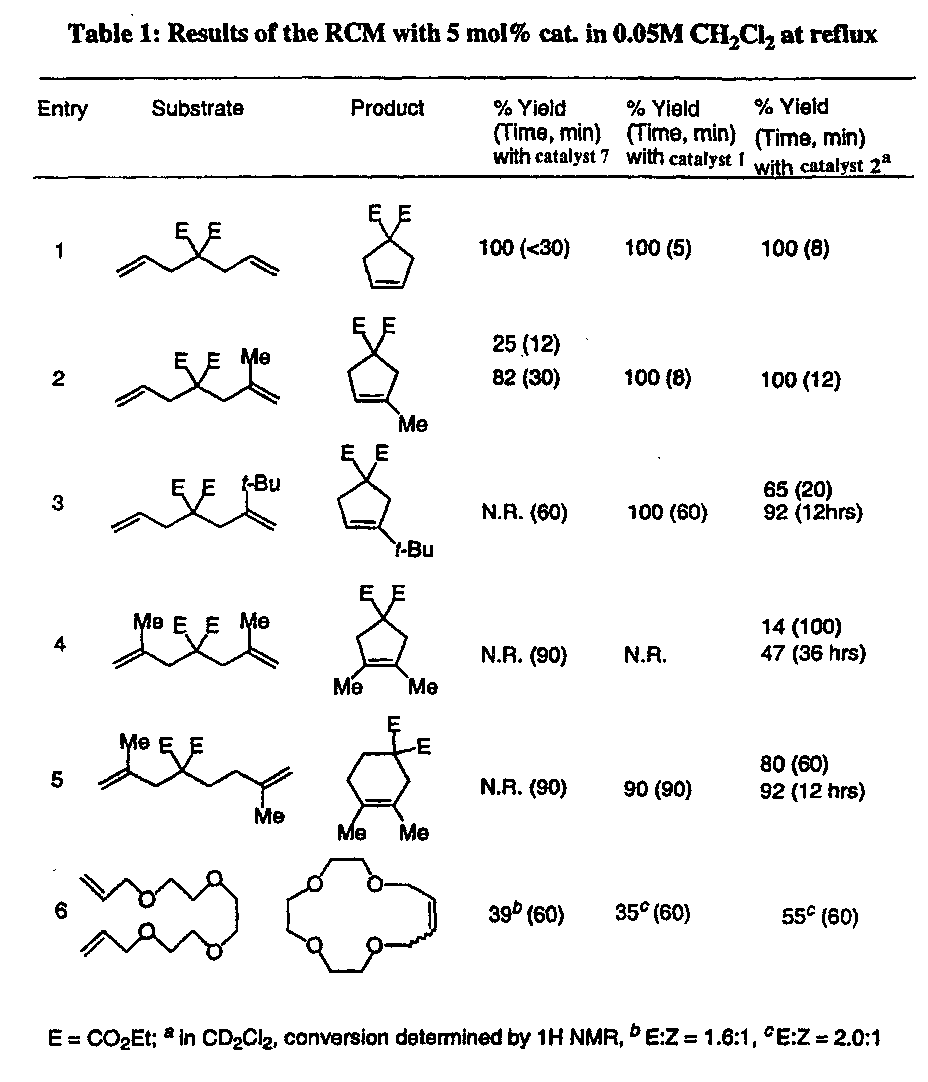

As it can be seen, the ring closure of diethyl diallylmalonate ester (entry 1) is completed in less than 10 minutes at 40 °C with both complexes **1** and **2** while complex **7** requires about 30 minutes. The increased activity of complexes **1** and **2** is most apparent in RCM reactions with more sterically demanding olefins. For example, **2**-*tert*-butyl-diethyl diallyl malonate ester (entry 3) can be cyclized with 5 mol% of catalyst **1** in one hour, with 5 mol% of catalyst **2** in twelve hours, while the corresponding reaction with 5 mol% of catalyst **7** does not yield any significant amount of cyclized product. Similarly, tetrasubstituted olefins (entries 4 and 5) can be prepared in moderate to excellent yields using complexes **1** and **2.**

Table 2 shows the results of the same RCM experiments for previously described metathesis catalysts including complexes 7 and 8.

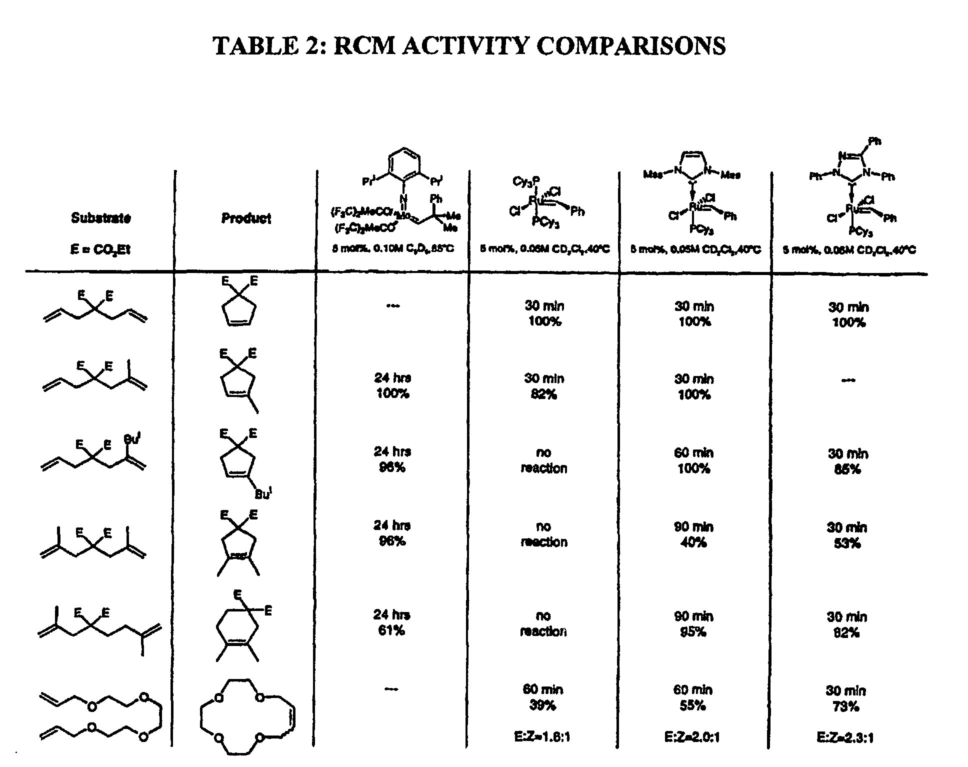

Since complexes **1** and **2** are much more reactive than complex **7,** the use of lower catalysts loading for RCM reactions was investigated. The ring closure of diethyl diallylmalonate under the reaction conditions listed in Table 1 was conducted using 0.1, 0.05, and 0.01 mol% of catalysts (**1** or **2**) with respect to the substrate. In the first case, quantitative conversions within one hour were observed with both catalysts; in the second case, the conversion were quantitative with **1** (one hour) and 94% with **2** (three hours). In the third case, the conversions were nearly zero, which indicates that 0.01 mol% is at the lower limit of the catalyst loading for this type of RCM reactions.

The catalysts of the present invention are also useful for ROMP reactions. In general, the method involves contacting the catalyst with a cyclic olefin. The cyclic olefin substrate may be a single cyclic olefin or a combination of cyclic olefins (*i.e*. a mixture of two or more different cyclic olefins). The cyclic olefins may be strained or unstrained, monocyclic or polycyclic, and may optionally include hetero atoms and/or one or more functional groups. Suitable cyclic olefins include but are not limited to norbornene, norbornadiene, dicyclopentadiene, cyclopentene, cycloheptene, cyclooctene, cyclooctadiene, cyclododecene, 7-oxanorbornene, 7-oxanorbornadiene, and derivatives therefrom. Illustrative examples of suitable functional groups include but are not limited to hydroxyl, thiol, ketone, aldehyde, ester, ether, amine, imine, amide, nitro, carboxylic acid, disulfide, carbonate, isocyanate, carbodiimide, carboalkoxy, and halogen. Preferred cyclic olefins include norbomene and dicyclopentadiene and their respective homologs and derivatives. The most preferred cyclic olefin is dicyclopentadiene ("DCPD").

The ROMP reaction may occur either in the presence or absence of solvent and may optionally include formulation auxiliaries. Known auxiliaries include antistatics, antioxidants, light stabilizers, plasticizers, dyes, pigments, fillers, reinforcing fibers, lubricants, adhesion promoters, viscosity-increasing agents and demolding enhancers. Illustrative examples of fillers for improving the optical physical, mechanical and electrical properties include glass and quartz in the form of powders, beads and fibers, metal and semi-metal oxides, carbonates (*i.e.* MgCO₃, CaCO₃), dolomite, metal sulfates (such as gypsum and barite), natural and synthetic silicates (*i.e*. zeolites, wollastonite, feldspars), carbon fibers, and plastics fibers or powders.

The inventive catalysts' utility in ROMP reactions was demonstrated with polymerizations both *endo-* and *exo*-DCPD. Exposure of neat DCPD to catalyst **1** (10,000:1) yielded within seconds a hard, highly-crosslinked material. In fact, catalyst loadings as low as 130,000:1 have been used to make high-quality poly-DCPD product. In contrast, previously described ruthenium and osmium catalysts such as **7**, required loadings of 7,000:1 to obtain similar poly-DCPD product.

As demonstrated by the synthesis of telechelic polybutadiene by chain transfer ROMP, the inventive catalysts are also extremely active in the polymerization of unstrained cyclic olefins. For example, with a catalyst loading of about 12,000:1 (monomer to catalyst **1**), the yield of telechelic polymers is higher (65%) than that using the bis-phosphine complex **7** at much lower monomer to catalyst ratio of 2,000:1 (50%).

High activities were also observed in the crossmetathesis of acyclic olefins. As an example, the cross metathesis of 9-decen-1-yl benzoate with *cis*-2-buten-1,4-diol diacetate catalyzed by **2** gave a high yield (80%) and a higher amount of the *trans* isomer (E:Z = 9:1) compared to that when the corresponding bis-phosphine complex **7** was used (E:Z = 4.7:1).

### EXAMPLE 1

A synthetic protocol for a representative example of an imidazolidine ligand is as follows. Other imidazolidine ligands are made analogously.

### Preparation of 1,2-dimesityl ethylene diimine:

A 300 mL round bottom flask was charged with acetone (50 mL), water (100 mL) and mesityl amine (10.0 g, 74 mmol). The solution was cooled to 0°C and a solution of 40% glyoxal in water (5.38 g, 37 mmol) was added slowly. The reaction mixture was allowed to warm up to room temperature slowly and was stirred for additional 8 hours. The yellow precipitate formed was filtered off, briefly washed with cold acetone and air-dried to yield 1,2-dimesityl ethylene diimine.

### Preparation of 1,2-dimesityl ethylene diamine:

(a) with H₂, Pd/C: A 50 mL round bottom flask was charged with 1,2-dimesityl ethylene diimine (300 mg, 1.01 mmol) and ethanol (20 mL). 10% Pd/C (30 mg) was added and a hydrogen balloon was attached via a needle. TLC indicated complete spot-to-spot conversion within 4 hours. The Pd catalyst was filtered off and the volatiles were pumped off in vacuo to yield 1,2-dimesityl ethylene diamine.
(b) with NaCNBH₃: A 300 mL round bottom flask was charged with 1,2-dimesityl ethylene diimine (3.8 g, 13 mmol), methanol (100 mL) and NaCNBH₃ (4,92 g, 78 mmol). Concentrated HCl was added dropwise to maintain the pH below 4, and the reaction was stirred at room temperature for 20 hours (overnight). The solution was then diluted with 50 mL water, made basic with NaOH, and extracted thoroughly with CH₂Cl₂. The organic layer war dried over MgSO₄, filtered and the solvent was removed in vacuo to yield 1,2-dimesityl ethylene diamine (95% yield).

### Preparation of 1,3-dimesityl-4,5-dihydro-imidazolium tetrafluoroborate:

A round bottom flask was charged with 1,2-dimesityl ethylene diamine (3.8 g, 12.8 mmol), triethyl orthoformate (15 mL) and ammonium tetrafluoroborate (1.35 g, 12.8 mmol). The reaction mixture was stirred at 120°C for 4 hours at which time TLC indicated complete conversion. Volatiles were removed in vacuo and the product was used as prepared or it could be purified further by recrystallization from ethanol/hexanes.

### EXAMPLE 2

### Synthesis of Cl₂Ru(=CHPh)(PCy₃)(1,3-dimesityl-4,5-dihydro-2-imidazole):

The imidazolidine ligand synthesized as detailed in Example 1 is used to prepare the corresponding imidazolidine catalyst ("complex **1"**)of the present invention. A 100-mL flame dried Schlenk flask equipped with a magnetic stir bar was charged with 1,3-dimesityl-4,5-dihydro-imidazolium tetrafluoroborate (394 mg, 1.0 mmol, 1 equiv.) and dry THF (20 mL) under nitrogen atmosphere. To this suspension, potassium *tert*-butoxide (122 mg, 1.0 mmol, 1 equiv.) was slowly added at room temperature. The tetrafluoroborate salt was dissolved immediately to give a yellow solution. The reaction mixture was allowed to stir at room temperature for one hour, followed by cannula transferring the reaction solution into another 100-mL dry Schlenk flask under Argon. The solvent was evaporated under high vacuum, followed by adding dry benzene (25 mL) and RuCl₂(=CHPh)(PCy₃)₂ (700 mg, 0.85 mmol, 0.85 equiv.). The reaction mixture was heated at 80 °C for 90 minutes. When the reaction was complete indicated by NMR, the volatiles were removed under high vacuum and the residue was washed by dry methanol (20 ml x 4) to give pinkish brown microcrystalline solid (404 mg) in 56% yield.: ¹H NMR (CD₂Cl₂, 400 MHz) δ 19.16 (s, 1H), 7.37-7.05 (m, 9H), 3.88 (s, 4H), 2.56-0.15 (m, 51H); ³¹P NMR (CD₂Cl₂, 161.9 MHz) δ 31.41; HRMS (FAB) C₄₅H₆₅Cl₂N₂PRu [M⁺] 848.3306, found 848.3286.

### EXAMPLE 3

### Synthesis of complex 2

A second example of synthetic protocol for making the inventive catalysts (complex **2**) follows. 1,3-dimesityl-trans-hexahydrobenzoimidazolium tetrafluoroborate (272 mg, 0.61 mmol, 1.0 equiv.) was suspended in anhydrous tetrahydrofuran ("THF"; 5 mL) under inert atmosphere. To this suspension, potassium tert-butoxide ("KO^{t}Bu")was added (65 mg, 0.61 mmol, 1.0 equiv.). Immediately upon addition of KO^{t}Bu, the tetrafluoroborate salt dissolved completely and the reaction mixture turned yellow. Complex **7**, RuCl₂(=CHPh)(PCy₃)₂ (400 mg, 0.49 mmol), was added to the reaction mixture as a solution in anhydrous benzene (15 mL). The reaction mixture was heated in an oil bath at 80 °C for 80 minutes at which time ¹H NMR spectrum indicated a ratio of product (complex **2**) to complex **7** of 95:5. Volatiles were removed *in vacuo* and the residue was washed under inert atmosphere with anhydrous pentane (4X 20 mL) to give pure product as a pinkish-brown microcrystalline solid (270 mg, 0.3 mmol) in 61% yield. Scheme 1 illustrates this protocol for complex **2** as well as for complexes **1** and **3.**

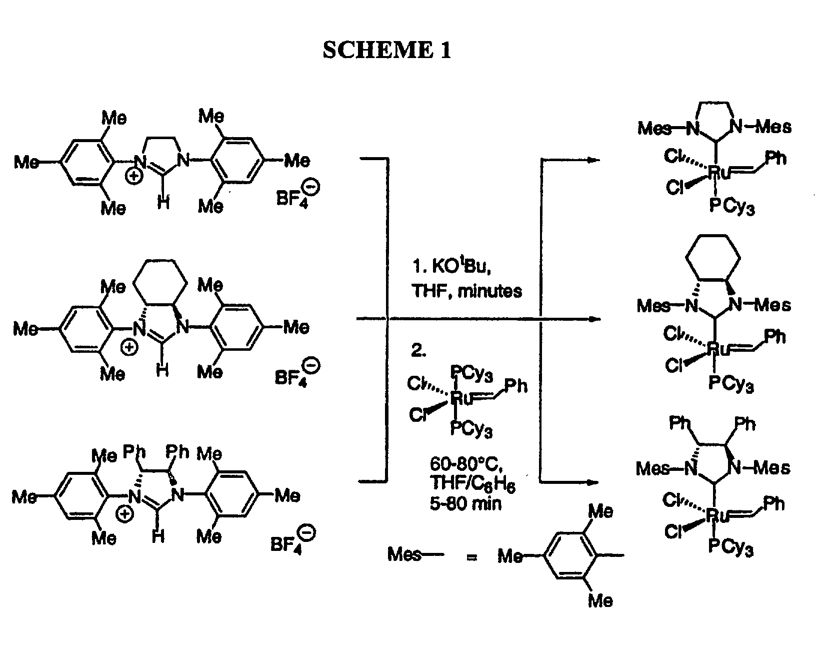

### EXAMPLE 4

The following are representative protocols for several common metathesis reactions.

### RCM Reactions

Complex **1** (42 mg, 50 µmol, 0.05 equiv.) was added to a solution of diethyl diallymalonate (240 mg, 1 mmol, 1 equiv.) in methylene chloride (20 mL, 0.05 M). The reaction mixture was refluxed on an oil bath (45 °C) for 5 minutes at which time ¹H NMR indicated 100% conversion to cyclopent-3-ene-1,1-dicarboxylic acid diethyl ester.

### Cross Metathesis Reactions:

Complex **2** (11 mg, 12 µmol, 0.023 equiv.) was added to a mixture of 9-decen-1-yl benzoate (145 µL, 0.525 mmol, 1 equiv.) and cis-2-buten-1,4-diol diacetate (160 µL, 1.014 mmol, 1.93 equiv.) in methylene chloride (2.5 mL, 0.21 M). After refluxing for 3.5 hours, the mixture was purified by flash column chromatography to yield the cross metathesis product as a clear, colorless oil (140 mg, 80% yield, E:Z = 9:1).

### ROMP Reactions with DCPD:

Complex **1** (6.5 mg, 7.5 µmol, 1 equiv.) in a small amount of CH₂Cl₂ (100 µL) was added to a stirring neat dicyclopentadiene (mixture of *exo*- and *endo*-isomers) (10.0 g, 75.6 mmol, 10,000 equiv.). Within a few seconds, the reaction mixture became increasingly viscous, warmed up significantly, and solidified shortly thereafter. On cooling, an odor free, nearly colorless solid was obtained.

### Telechelic Synthesis:

Complex **1** (3.1 mg, 3.7 µmol, 1 equiv.) was added to a stirring mixture of cyclooctadiene (5.00 g, 46.2 mmol, 12,500 equiv.) and 1,4-dichloro-cis-2-butene (1.16 g, 9.28 mmol, 2,500 equiv.). After 8 hours, the reaction mixture was diluted with methylene chloride (1 mL) and poured into an excess of methanol precipitating the dichloro-telechelic polybutadiene as a white solid (4.0 g, 65% yield).

### Polymerization of 5,6-Dihydroxycyclooctene

In a nitrogen filled drybox, a small vial was charged with 2 mg catalyst (1 equiv.), 150 mg 5,6-dihydroxycyclooctene (1000 equiv.), and 0.25 mL of benzene. The vial was capped tightly, removed from the drybox, and submerged in a constant temperature oil bath set at 50 degrees. After 10 hours, a slightly yellow viscous oil formed. Upon the addition of tetrahydrofuran, a white gel separated and was found to be insoluble in all common organic solvents. Residual, unreacted monomer could be detected in the tetrahydrofuran layer by ¹H NMR.

### EXAMPLE 5

To better appreciate the advantageous properties of the inventive catalysts, the ROMP reactions of low strain cyclic olefins, cis, cis-cycloocta-1,5-diene ("COD") and cis-cyclooctene ("COE") with inventive catalysts **1** and **6** 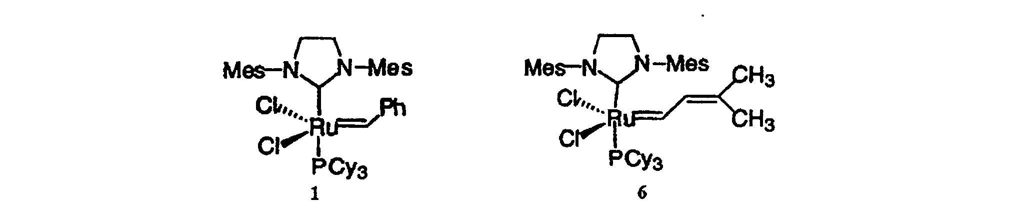 and representative prior art catalysts 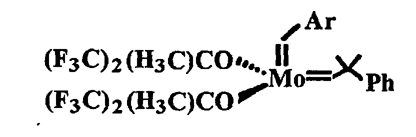 wherein Ar = C₆H₃-2,6-(^{*i*}PR) ("catalyst **8**") and 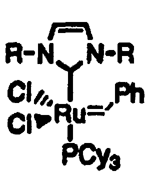 wherein R = Mes ("catalyst **9**") were compared. The molybdenum catalyst **8** was purchased from Strem Chemicals and recrystallized from pentane at -40 °C prior to use. For the ROMP kinetics experiments, COD, COE, and CD₂Cl₂ were distilled from CaH₂ and bubbled with argon prior to use. All polymerizations were performed under an atmosphere of nitrogen.

The ROMP of COD and COE were catalyzed with the respective catalysts and the percent monomer converted to polymer was followed over time using ¹H NMR spectroscopy. As shown by Figures 1 and 2, the rate of polymerization at 20°C using catalyst **1** was significantly higher than the molybdenum catalyst **8.** As illustrated by Figure 3, the rate of polymerization at 55°C using catalysts **6** and **9** were also higher than for the molybdenum catalyst **8**. Because the propagating species resulting from catalysts **1** and **6** are the same, the observed difference in polymerization rates between them is believed to be due to the initiation rate. The bulkier benzylidene is believed to facilitate phosphine dissociation thereby enhancing initiation to a greater extent than the dimenthylvinyl carbene counterpart. Previous studies have shown that alkylidene electronics have a relatively small influence on the initiation rate.

Although imidazole-based catalysts such as catalyst **9** and the imidazoline-based catalyst of the present invention may appear structurally similar, they possess vastly different chemical properties due to the differences in their electronic character of the five membered ring. For example, the chemical differences between 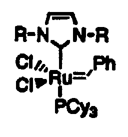 and 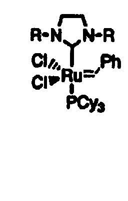 is as profound as the differences between 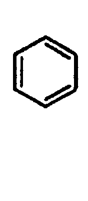 and

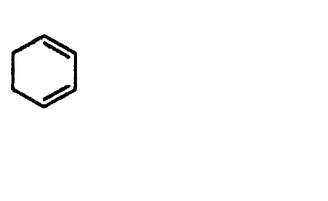

### EXAMPLE 6

The catalysts of the present invention are capable of polymerizing a variety of low strain cyclic olefins including cyclooctadiene, cyclooctene, and several functionalized and sterically hindered derivatives with extremely low catalyst loadings (up to monomer/catalysts = 100,000). Representative results are shown by Table 3.

**Table 3:**

| **ROMP of various low strain cyclic olefins** | | | | | | |
|---|---|---|---|---|---|---|
| **Monomer** | **Monomer to Catalyst Ratio** | **Temp. (°C)** | **Time** | **Yield (%)** | **M**_{**n**} **(PDI)**^{**a**} | **% Trans**^{**b**} |
| 1,5 cyclooctadiene | 100,000 | 55 | 30 min | 85 | 112,400 (2.3) | 70 |
| | 10,000 | 25 | 24 h | 85 | 92,900 (2.5) | 85 |
| | 25,000 | 55 | 24 h | 89 | 10,700 (2.1) | 90 |
| cyclooctene | 100,000 | 55 | 5 min | e | e | f |
| | 10,000 | 25 | 30 min | e | e | f |
| | 25,000^{c} | 55 | 24 h | 75 | 2200 (1.6) | 85 |
| 1-hydroxy 4-cyclooctene | 100,000 | 55 | 5 min | e | e | f |
| | 10,000 | 25 | 30 min | e | e | f |
| | 25,000^{d} | 55 | 24 h | 85 | 2600 (2.3) | 85 |
| 1-acetoxy-4-cyclooctene | 10,000 | 55 | 5 min | 50 | 103,900 (2.8) | 85 |
| | 1000 | 25 | 1 h | 60 | 79,300 (3.2) | 90 |
| 5-methylcyclopentene | 1000 | 25 | 24 h | 50 | 23,000 (2.5) | 50 |
| cyclopentene | 1000 | 25 | 24 h | 52 | 9000 (3.5) | 90 |

| | | | | | | |
|---|---|---|---|---|---|---|
| ^{a} Determined by CH₂Cl₂ or THF GPC and results are reported relative to poly(styrene) standards; | | | | | | |
| ^{b} Percent trans olefin in the polymer backbone as determined by 1H and 13C NMR analysis; | | | | | | |
| ^{c} 1,4-diacetoxy-cis-2-butene was included as a chain transfer agent ("CTA") wherein the Monomer/CTA = 80; | | | | | | |
| ^{d} Monomer/CTA = 10, [Monomer]₀ = 4.5 M in C₂H₄Cl₂; | | | | | | |
| ^{e} Polymer was insoluble; | | | | | | |
| ^{f} Not determined. | | | | | | |

Elevated temperatures (55 °C) generally increased the yields of polymer while reducing reaction times. The inclusion of acyclic olefins which act as chain transfer agents controlled the molecular weights. The addition of CTAs is desirable when insoluble polymers are obtained by ring-opening monomers such as COE in bulk. Polymers possessing alcohols or acetic ester along their backbone could also be prepared using functionalized monomers such as 5-hydroxy- or 5-acetoxy-cyclooctene. The functional groups on these polymers could easily be derivatized to form graft copolymers or side-chain liquid crystalline polymers. In general, ¹H NMR spectroscopy indicated a predominantly (70-90%) trans-olefin microstructure in these polymers. As expected for an equilibrium controlled polymerization where chain transfer occurs, longer polymerization times resulted in higher trans-olefin values.

### EXAMPLE 7

A highly strained monomer, *exo,exo*-5,6-bis(methoxymethyl)-7-oxabicyclo[2.2.1]hept-2-ene, was polymerized via ROMP reaction using catalyst **1** in the presence of 1,4-diacetoxy-2-butene as a chain transfer agent. The reaction was conducted in C₂H₄Cl₂ at 55 °C for 24 hours and resulted in a bis-(acetoxy) end-terminated polymer in 80% yield (Mn = 6300, PDI 2.0). This result is particularly notable since telechelic polymers composed of highly strained monomers are relatively difficult to obtain using other methods. For example, a metathesis degradation approach using a tungsten analog of catalyst **8** has been used to prepare telechelic poly(oxanorbornene)s and poly(norbornene)s. However, only certain telechelic polymers are amenable to this approach since the limited ability of the tungsten catalyst to tolerate functional groups imposes a severe restriction on the range of chain transfer agents that may be used. Alternatively, a "pulsed addition" approach has been used with catalysts **7** and **8.** However, because monomer and/or CTA must be added in a carefully timed manner, this approach is relatively difficult to perform and is not readily amenable to industrial applications.

### EXAMPLE 8

1,5-dimethyl-1,5-cyclooctadiene, a sterically hindered, low strain, di-substituted cyclic olefin was polymerized using catalyst **1.** The 1,5-dimethyl-1,5-cyclooctadiene used in this study contained 1,6-dimethyl-1,5-cyclooctadiene (20%) as an inseparable mixture. This ROMP reaction was performed at 55 °C with monomer/catalyst ratio of 1000 and resulted in a 90% yield of poly(isoprene) having a Mₙ of 10,000 and a PDI of 2.3. To the best of our knowledge, this example represents the first ROMP of this monomer. Subsequent hydrogenation using p-toluenesulfonhydrazide as a hydrogen source afforded an ethylene-propylene copolymer in quantitative yield (as determined by NMR analysis). Previously, a six step synthesis was necessary to obtain a similar copolymer via a metathetical route.

The resulting ethylene-propylene copolymer was not "perfectly" alternating because of the impurity in the 1,5-dimethyl-1-5-cyclooctadiene starting material. However, since trisubstituted alkylidenes were not observed as a side product, poly(isoprene) product having perfectly alternating head to tail microstructure would have likely been formed if a higher grade of 1,5-dimethyl-1-5-cyclooctadiene were used. As a result, practice of the present invention could result in a perfectly alternating ethylene-propylene product.

### EXAMPLE 9

2-methyl-1-undecene (110 µL, 0.5 mmol) and 5-hexenyl-1-acetate (170 µL, 1.0 mmol) were simultaneously added *via* syringe to a stirring solution of complex **1** (20 mg, 0.024 mmol, 4.8 mol %) in CH₂Cl₂ (2.5 mL). The flask was fitted with a condenser and refluxed under nitrogen for 12 hours. The reaction mixture was then reduced in volume to 0.5 ml and purified directly on a silica gel column (2x10 cm), eluting with 9:1 hexane:ethyl acetate. A clear oil was obtained (83 mg, 60% yield, 2.3:1 trans/cis as determined by relative intensity of alkene ¹³C peaks at 125.0 and 124.2 ppm). ¹H NMR (300 MHz, CDCl₃, ppm): 5.08 (1H, t, *J*= 2.0 Hz), 4.04 (2H, t, *J*= 6.0 Hz), 2.03 (3H, obs s), 2.01-1.91 (2H, m), 1.69-1.59 (2H, m), 1.56 (3H, obs s), 1.47-1.05 (16H, broad m), 1.05-0.84 (3H, t, *J* = 6.8 Hz) ¹³C NMR (75 MHz, CDCl₃, ppm): 171.7, 136.7, 136.4, 125.0, 124.2, 123.3, 65.1, 40.3, 32.5, 32.3, 30.2, 29.9, 28.8, 28.6, 28.5, 28.0, 26.7, 23.2, 21.5, 16.4, 14.7. *R*_{f}= 0.35 (9:1 hexane:ethyl acetate); HRMS (EI) calcd for C₁₈H₃₄O₂ [M]⁺ 282.2559, found 282.2556.

### EXAMPLE 10

9-Decen-1(*tert*-butyldimethylsilane)-yl (330 µL, 1.0 mmol) and Methyl methacrylate (55 µl, 0.51 mmol) were added simultaneously *via* syringe to a stirring solution of complex **1** (21 mg, 0.026 mmol, 5.2 mol %) in CH₂Cl₂ (2.5 ml). The flask was fitted with a condenser and refluxed under nitrogen for 12 hours. The reaction mixture was then reduced in volume to 0.5 ml and purified directly on a silica gel column (2x10 cm), eluting with 9:1 hexane:ethyl acetate. A viscous oil was obtained (110 mg, 62% yield, only *trans* isomer detected in ¹H and ¹³C NMR spectra). ¹H NMR (300 MHz, CDCl₃, ppm): δ 6.75 (1H, m), 3.71 (3H, s), 3.57 (2H, t, *J*= 6.3 Hz), 2.14 (2H, m), 1.81 (3H, app s), 1.50 - 1.05 (12H, broad m), 0.87 (9H, s), 0.02 (6H, s). ¹³C NMR (75 MHz, CDCl₃, ppm): δ 169.2, 143.2, 128.0, 63.8, 52.1, 33.4, 30.0, 29.8, 29.2, 29.1, 26.5, 26.3, 18.9. 12.9. *R*_{f}= 0.81 (9:1 hexane:ethyl acetate); HRMS (EI) calcd for C₁₉H₃₈O₃Si [M + H]⁺ 343.2668, found 343.2677. Elemental analysis calcd: C: 66.61, H: 11.18; found: C: 66.47, H: 11.03.

## Claims

1. A compound of the formula 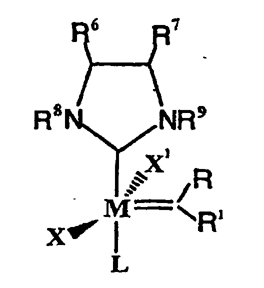 wherein:
M is ruthenium or osmium;
X and X¹ are each independently an anionic ligand;
L is a neutral electron donor ligand; and,
R, R¹ R⁶, R⁷, R⁸, and R⁹ are each independently hydrogen or a substituent selected from the group consisting of C₁-C₂₀ alkyl, C₂-C₂₀ alkenyl, C₂-C₂₀ alkynyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthiol, aryl thiol, C₁-C₂₀ alkylsulfonyl and C₁-C₂₀ alkylsulfinyl, the substituent optionally substituted with one or more moieties selected from the group consisting of C₁-C₁₀ alkyl, C₁-C₁₀ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

2. The compound as in claim 1 wherein:
M is ruthenium;
L is selected from the group consisting of phosphine, sulfonated phosphine, phosphite, phosphinite, phosphonite, arsine, stibirie, ether, amine, amide, imine, sulfoxide, carboxyl, nitrosyl, pyridine, and thioether; and,
X and X¹ are each independently hydrogen, halide, or a substituent selected from the group consisting of C₁-C₂₀ alkyl, aryl, C₁-C₂₀ alkoxide, aryloxide, C₃-C₂₀ alkyldiketonate, aryldiketonate, C₁-C₂₀ carboxylate, arylsulfonate, C₁-C₂₀ alkylsulfonate, C₁-C₂₀ alkylthiol, aryl thiol, C₁-C₂₀ alkylsulfonyl, and C₁-C₂₀ alkylsulfinyl, the substituent optionally substituted with one or more moieties selected from the group consisting of C₁-C₁₀ alkyl, C₁-C₁₀ alkoxy, aryl and halide.

3. The compound as in claim 1 wherein:
M is ruthenium;
X and X¹ are each independently selected from the group consisting of halide, CF₃CO₂, CH₃CO₂, CFH₂CO₂, (CH₃)₃CO, (CF₃)₂(CH₃)CO, (CF₃)(CH₃)₂CO, PhO, MeO, EtO, tosylate, mesylate, and trifluoromethanesulfonate;
L is a phosphine of the formula PR³R⁴R⁵, where R³, R⁴, and R⁵ are each independently aryl, C₁-C₁₀ alkyl, or cycloalkyl;
R is hydrogen; and,
R¹ is phenyl or vinyl, optionally substituted with one or more moieties selected from the group consisting of C₁-C₅ alkyl, C₁-C₅ alkoxy, phenyl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

4. The compound as in claim 3 wherein
X and X¹ are each chloride;
L is selected from the group consisting of -P(cyclohexyl)₃, -P(cyclopentyl)₃, -P(isopropyl)₃, and -P(phenyl)₃; and,
R¹ is phenyl or -C=C(CH₃)₂;

5. The compound as in claim 4 wherein R⁶ and R⁷ together form a cycloalkyl or an aryl.

6. The compound as in claim 4 wherein R⁶ and R⁷ together form a cyclopentyl or a cyclohexyl moiety.

7. The compound as in claim 4 wherein R⁶ and R⁷ are the same and are hydrogen or phenyl.

8. The compound as in claim 4 wherein R⁸ and R⁹ are each independently a substituted or unsubstituted aryl.

9. The compound as in claim 4 wherein R⁸ and R⁹ are the same and are phenyl.

10. The compound as in claim 4 wherein R⁸ and R⁹ are each independently of the formula 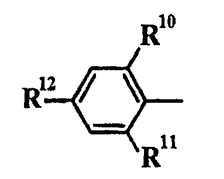 wherein
R¹⁰, R¹¹, and R¹² are each independently hydrogen, C₁-C₁₀ alkyl, C₁-C₁₀ alkoxy, aryl, or a functional group selected from hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

11. The compound as in claim 10 wherein R¹⁰, R¹¹, and R¹² are each independently hydrogen, methyl or isopropyl.

12. A compound of the formula 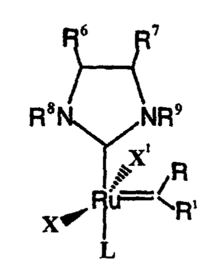 wherein:
X and X¹ are each chloride;
L is selected from the group consisting of -P(cyclohexyl)₃, -P(cyclopentyl)₃, -P(isopropyl)₃, and -P(phenyl)₃;
R is hydrogen;
R¹ is phenyl or vinyl, optionally substituted with one or more moieties selected from the group consisting of C₁-C₅ alkyl, C₁-C₅ alkoxy, phenyl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen;
R⁶ and R⁷ are each independently hydrogen, phenyl, or together form a cycloalkyl or an aryl optionally substituted with one or more moieties selected from the group consisting of C₁-C₁₀ alkyl, C₁-C₁₀ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen; and
R⁸ and R⁹ are each independently C₁-C₁₀ alkyl or aryl optionally substituted with C₁-C₅ alkyl, C₁-C₅ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

13. The compound as in claim 12 wherein R⁸ and R⁹ are each independently a cycloalkyl or a phenyl optionally substituted with C₁-C₅ alkyl, C₁-C₅ alkoxy, or halogen.

14. The compound as in claim 12 wherein R⁸ and R⁹ are each independently of the formula 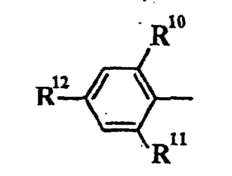 wherein
R¹⁰, R¹¹, and R¹² are each independently hydrogen, C₁-C₁₀ alkyl, C₁-C₁₀ alkoxy, aryl, or a functional group selected from hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

15. The compound as in claim 14 wherein R¹⁰, R¹¹, and R¹² are the same and are each methyl.

16. The compound as in claim 12 selected from the group consisting of 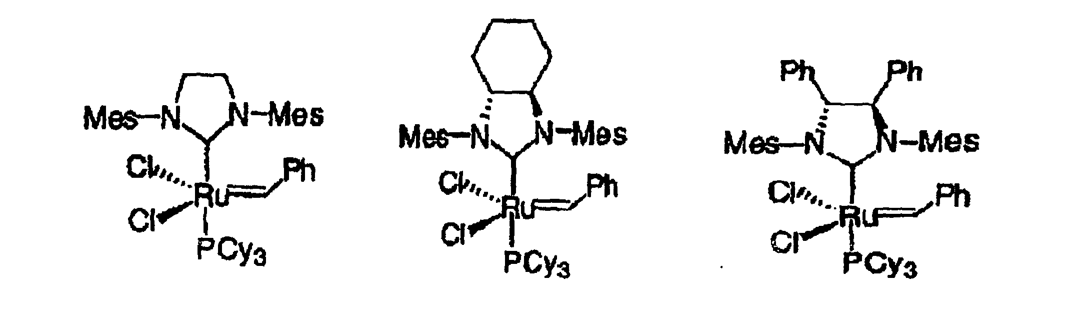 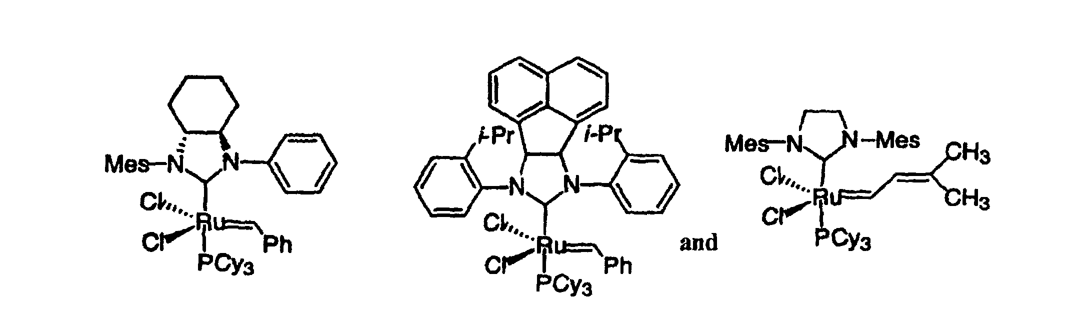 wherein PCy₃ is -P(cyclohexyl)₃.

17. A compound of the formula 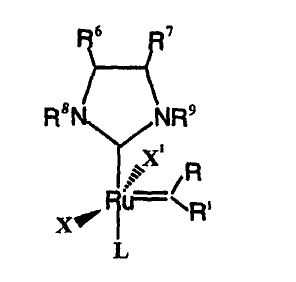 wherein:
X and X¹ are each chloride;
L is selected from the group consisting of -P(cyclohexyl)₃, -P(cyclopentyl)₃, -P(isopropyl)₃, and -P(phenyl)₃;
R is hydrogen;
R¹ is phenyl or -C=(CH₃)₂;
R⁶ and R⁷ are each independently hydrogen, phenyl, or together form a cyclopentyl or cyclohexyl; and
R⁸ and R⁹ are each independently of the formula 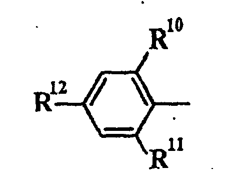
wherein
R¹⁰, R¹¹, and R¹² are each independently hydrogen, methyl, ethyl, propyl, isopropyl, hydroxyl, and halogen.

18. A method for making a compound of the formula 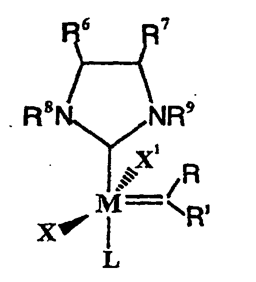 comprising contacting 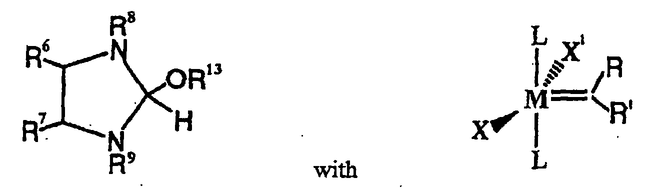 wherein:
M is ruthenium or osmium;
X and X¹ are each independently an anionic ligand;
L is a neutral electron donor ligand;
R, R¹ R⁶, R⁷, R⁸, and R⁹ are each independently hydrogen or a substituent selected from the group consisting of C₁-C₂₀ alkyl, C₂-C₂₀ alkenyl, C₂-C₂₀ alkynyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthiol, aryl thiol, C₁-C₂₀ alkylsulfonyl and C₁-C₂₀ alkylsulfinyl, the substituent optionally substituted with one or more moieties selected from the group consisting of C₁-C₁₀ alkyl, C₁-C₁₀ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen; and,
R¹³ is C₁-C₂₀ alkyl or aryl.

19. The method as in claim 18 wherein
M is ruthenium;
X and X¹ are each chloride;
L is selected from the group consisting of -P(cyclohexyl)₃, -P(cyclopentyl)₃, -P(isopropyl)₃, and -P(phenyl)₃;
R is hydrogen;
R¹ is phenyl or -C=C(CH₃)₂;
R⁶ and R⁷ are each independently hydrogen, phenyl, or together form a cyclopenyl or cyclohexyl; and,
R⁸ and R⁹ are each independently a substituted or unsubstituted aryl.

20. The method as in claim 19 wherein R¹³ is t-butyl.

21. The method as in claim 18 wherein
M is ruthenium;
X and X¹ are each chloride;
L is selected from the group consisting of -P(cyclohexyl)₃, -P(cyclopentyl)₃, -P(isopropyl)₃, and -P(phenyl)₃;
R is hydrogen;
R¹ is phenyl or -C=C(CH₃)₂;
R⁶ and R⁷ together form a cycloalkyl group; and
R⁸ and R⁹ are the same and are each of the formula 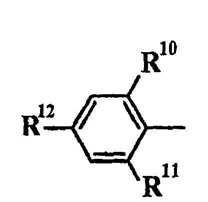
wherein
R¹⁰, R¹¹, and R¹² are each independently hydrogen, methyl, ethyl, propyl, isopropyl, hydroxyl, and halogen.

22. The method as in claim 21 wherein 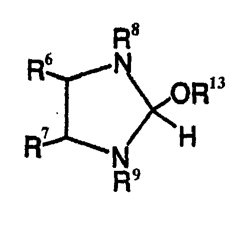 is optically active.

23. A method for making a metathesis catalyst comprising contacting a compound of the formula 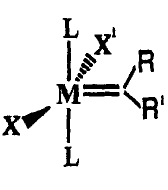 with an imidazolidine whereby the imidazolidine replaces one of the L ligands wherein:
M is ruthenium or osmium;
X and X¹ are each independently an anionic ligand;
L is a neutral electron donor ligand; and,
R and R¹ are each independently hydrogen or a substituent selected from the group consisting of C₁-C₂₀ alkyl, C₂-C₂₀ alkenyl, C₂-C₂₀ alkynyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthiol, aryl thiol, C₁-C₂₀ alkylsulfonyl and C₁-C₂₀ alkylsulfinyl, the substituent optionally substituted with one or more moieties selected from the group consisting of C₁-C₁₀ alkyl, C₁-C₁₀ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

24. The method as in claim 23 wherein the imidazolidine is formed by
contacting a secondary diamine with ammonium tetrafluoroborate to form an imidazolium salt; and
contacting the imidazolium salt with an alkyloxide to form the imidazolidine.

25. The method as in claim 24 wherein the secondary diamine is formed by contacting a diketone with an amine to form a diimine and
hydrogenating the diimine to form the secondary di-amine;

26. The method as in claim 24 wherein the alkyloxide is t-butoxide.

27. The method as in claim 24 wherein the imidazolidine is of the formula 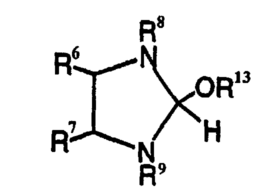 wherein
R⁶, R⁷, R⁸, and R⁹ are each independently hydrogen or a substituent selected from the group consisting of C₁-C₂₀ alkyl, C₂-C₂₀ alkenyl, C₂-C₂₀ alkynyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthiol, aryl thiol, C₁-C₂₀ alkylsulfonyl and C₁-C₂₀ alkylsulfinyl, the substituent optionally substituted with one or more moieties selected from the group consisting of C₁-C₁₀ alkyl, C₁-C₁₀ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen; and,
R¹³ is C₁-C₂₀ alkyl or aryl.

28. The method as in claim 27 wherein
M is ruthenium;
X and X¹ are each chloride;
L is selected from the group consisting of -P(cyclohexyl)₃, -P(cyclopentyl)₃, -P(isopropyl)₃, and -P(phenyl)₃;
R is hydrogen; and
R¹ is phenyl or vinyl, optionally substituted with one or more moieties selected from the group consisting of C₁-C₅ alkyl, C₁-C₅ alkoxy, phenyl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

29. The method as in claim 28 wherein R¹ is phenyl or -C=C(CH₃)₂ and R¹³ is t-butoxide.

30. The method as in claim 28 wherein
R⁶ and R⁷ are each independently hydrogen, phenyl, or together form a cycloalkyl or an aryl optionally substituted with one or more moieties selected from the group consisting of C₁-C₁₀ alkyl, C₁-C₁₀ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen; and
R⁸ and R⁹ are each independently either substituted or unsubstituted aryl.

31. The method as in claim 30 wherein R⁸ and R⁹ are each is independently of the formula 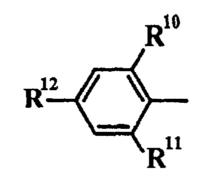 wherein
R¹⁰, R¹¹, and R¹² are each independently hydrogen, methyl, ethyl, propyl, isopropyl, hydroxyl, and halogen.

32. A method for performing a metathesis reaction comprising contacting an olefin with a compound of the formula 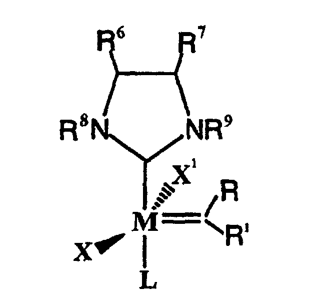 wherein:
M is ruthenium or osmium;
X and X¹ are each independently an anionic ligand;
L is a neutral electron donor ligand; and,
R, R¹ R⁶, R⁷, R⁸, and R⁹ are each independently hydrogen or a substituent selected from the group consisting of C₁-C₂₀ alkyl, C₂-C₂₀ alkenyl, C₂-C₂₀ alkynyl, aryl, C₁-C₂₀ carboxylate, C₁-C₂₀ alkoxy, C₂-C₂₀ alkenyloxy, C₂-C₂₀ alkynyloxy, aryloxy, C₂-C₂₀ alkoxycarbonyl, C₁-C₂₀ alkylthiol, aryl thiol, C₁-C₂₀ alkylsulfonyl and C₁-C₂₀ alkylsulfinyl, the substituent optionally substituted with one or more moieties selected from the group consisting of C₁-C₁₀ alkyl, C₁-C₁₀ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

33. The method as in claim 32 wherein:
M is ruthenium;
X and X¹ are each chloride;
L is selected from the group consisting of -P(cyclohexyl)₃, -P(cyclopentyl)₃, -P(isopropyl)₃, and -P(phenyl)₃;
R is hydrogen;
R¹ is phenyl or vinyl, optionally substituted with one or more moieties selected from the group consisting of C₁-C₅ alkyl, C₁-C₅ alkoxy, phenyl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen;
R⁶ and R⁷ are each independently hydrogen, phenyl, or together form a cycloalkyl or an aryl optionally substituted with one or more moieties selected from the group consisting of C₁-C₁₀ alkyl, C₁-C₁₀ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen; and
R⁸ and R⁹ are each independently C₁-C₁₀ alkyl or aryl optionally substituted with C₁-C₅ alkyl, C₁-C₅ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

34. The method as in claim 32 wherein the compound is selected from the group consisting of

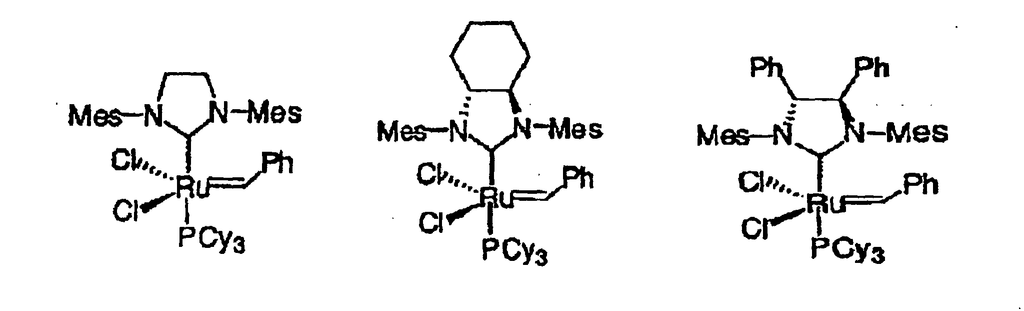

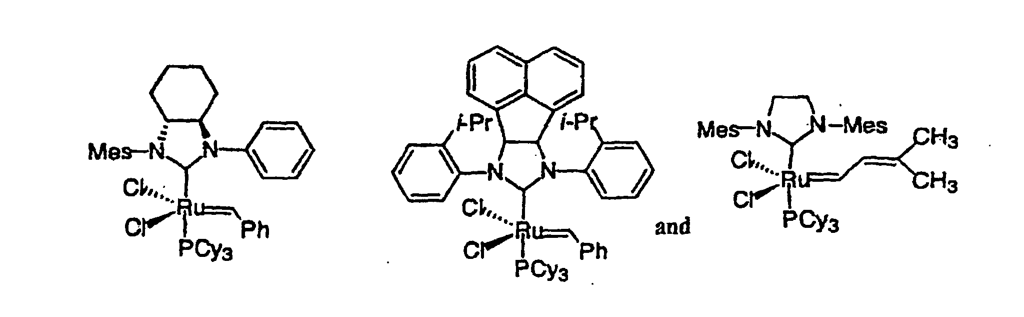

35. The method as in claim 33 wherein the olefin is a cyclic olefin.

36. The method of Claim 32 wherein the olefin is cyclic or acyclic.

37. The method of Claim 32 wherein the olefin bears at least one electron withdrawing group.

## Patentansprüche

1. Verbindung der Formel 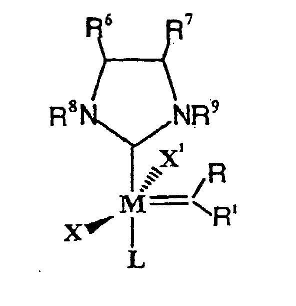 worin:
M Ruthenium oder Osmium ist;
X und X¹ jeweils unabhängig voneinander ein anionischer
Ligand sind;
L ein neutraler Elektronendonorligand ist; und
R, R¹, R⁶, R⁷, R⁸ und R⁹ jeweils unabhängig voneinander Wasserstoff oder ein Substituent sind, der aus der Gruppe ausgewählt ist, die besteht aus C₁-C₂₀ Alkyl, C₂-C₂₀ Alkenyl, C₂-C₂₀ Alkinyl, Aryl, C₁-C₂₀ Carboxylat, C₁-C₂₀ Alkoxy, C₂-C₂₀ Alkenyloxy, C₂-C₂₀ Alkinyloxy, Aryloxy, C₂-C₂₀ Alkoxycarbonyl, C₁-C₂₀ Alkylthiol, Arylthiol, C₁-C₂₀ Alkylsulfonyl und C₁-C₂₀ Alkylsulfinyl, wobei der Substituent gegebenenfalls mit einer oder mehreren Einheiten substituiert ist, die ausgewählt sind aus der Gruppe, die besteht aus C₁-C₁₀ Alkyl, C₁-C₁₀ Alkoxy, Aryl, und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

2. Verbindung nach Anspruch 1, worin:
M Ruthenium ist;
L aus der Gruppe ausgewählt ist, die besteht aus Phosphin, sulfoniertem Phosphin, Phosphit, Phospinit, Phosphonit, Arsin, Stibin, Ether, Amin, Amid, Imin, Sulfoxid, Carboxyl, Nitrosyl, Pyridin und Thioether; und
X und X¹ jeweils unabhängig voneinander Wasserstoff, Halogen oder ein Substituent sind, der aus der Gruppe ausgewählt ist, die besteht aus C₁-C₂₀ Alkyl, Aryl, C₁-C₂₀ Alkoxy, Aryloxy, C₃-C₂₀ Alkyldiketonat, Aryldiketonat, C₁-C₂₀ Carboxylat, Arylsulfonat, C₁-C₂₀ Alkylsulfonat, C₁-C₂₀ Alkylthiol, Arylthiol, C₁-C₂₀ Alkylsulfonyl und C₁-C₂₀ Alkylsulfinyl, wobei der Substituent gegebenenfalls mit einer oder mehreren Einheiten substituiert ist, die aus der Gruppe ausgewählt sind, die besteht aus C₁-C₁₀ Alkyl, C₁-C₁₀ Alkoxy, Aryl und Halogenid.

3. Verbindung nach Anspruch 1, worin:
M Ruthenium ist;
X und X¹ jeweils unabhängig voneinander aus der Gruppe ausgewählt sind, die besteht aus Halogenid, CF₃CO₂, CH₃CO₂, CFH₂CO₂, (CH₃)₃CO, (CF₃)₂(CH₃)CO, (CF₃)(CH₃)₂CO, PhO, MeO, EtO, Tosylat, Mesylat und Trifluormethansulfonat;
L ein Phosphin der Formel PR³R⁴R⁵ ist, worin R³, R⁴ und R⁵ jeweils unabhängig voneinander Aryl, C₁-C₁₀-Alkyl oder Cycloalkyl sind;
R Wasserstoff ist; und
R¹ Phenyl oder Vinyl ist, gegebenenfalls substituiert mit einer oder mehreren Einheiten, die aus der Gruppe ausgewählt sind, die besteht aus C₁-C₅ Alkyl, C₁-C₅ Alkoxy, Phenyl und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

4. Verbindung nach Anspruch 3, worin
X und X¹ jeweils Chlorid sind;
L aus der Gruppe ausgewählt ist, die besteht aus -P(cyclohexyl)₃, -P(cyclopentyl)₃, -P(isopropyl)₃ und -P(Phenyl)₃; und
R¹ Phenyl oder -C=C(CH₃)₂ ist.

5. Verbindung nach Anspruch 4, worin R⁶ und R⁷ zusammen ein Cycloalkyl oder Aryl bilden.

6. Verbindung nach Anspruch 4, worin R⁶ und R⁷ zusammen eine Cyclopentyl- oder eine Cyclohexyl-Einheit bilden.

7. Verbindung nach Anspruch 4, worin R⁶ und R⁷ gleich sind und Wasserstoff oder Phenyl sind.

8. Verbindung nach Anspruch 4, worin R⁸ und R⁹ jeweils unabhängig voneinander ein substituiertes oder unsubstituiertes Aryl sind.

9. Verbindung nach Anspruch 4, worin R⁸ und R⁹ gleich sind und Phenyl sind.

10. Verbindung nach Anspruch 4, worin R⁸ und R⁹ jeweils unabhängig voneinander Reste der Formel sind 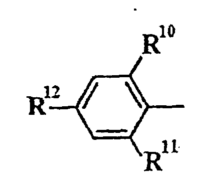 worin
R¹⁰, R¹¹ und R¹² jeweils unabhängig voneinander Wasserstoff, C₁-C₁₀ Alkyl, C₁-C₁₀ Alkoxy, Aryl oder eine funktionelle Gruppe sind, die ausgewählt ist aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

11. Verbindung nach Anspruch 10, worin R¹⁰, R¹¹ und R¹² jeweils unabhängig voneinander Wasserstoff, Methyl oder Isopropyl sind.

12. Verbindung der Formel 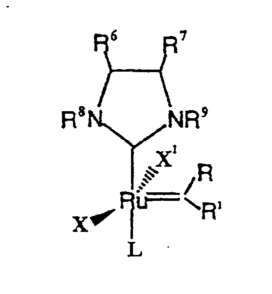 worin:
X und X¹ jeweils Chlorid sind;
L aus der Gruppe ausgewählt ist, die besteht aus -P(cyclohexyl)₃, -P(cyclopentyl)₃, -P(isopropyl)₃ und -P(phenyl)₃;
R Wasserstoff ist;
R¹ Phenyl oder Vinyl ist, gegebenenfalls substituiert mit einer oder mehreren Einheiten, die aus der Gruppe ausgewählt sind, die besteht aus C₁-C₅ Alkyl, C₁-C₅ Alkoxy, Phenyl und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen;
R⁶ und R⁷ jeweils unabhängig voneinander Wasserstoff oder Phenyl sind oder gemeinsam ein Cycloalkyl oder Aryl bilden, die gegebenenfalls mit einer oder mehreren Einheiten substituiert sind, die aus der Gruppe ausgewählt sind, die besteht aus C₁-C₁₀ Alkyl, C₁-C₁₀ Alkoxy, Aryl und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen; und
R⁸ und R⁹ jeweils unabhängig voneinander C₁-C₁₀ Alkyl oder Aryl sind, die gegebenenfalls mit C₁-C₅ Alkyl, C₁-C₅ Alkoxy, Aryl und einer funktionellen Gruppe substituiert sind, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

13. Verbindung nach Anspruch 12, worin R⁸ und R⁹ jeweils unabhängig voneinander ein Cycloalkyl oder ein Phenyl sind, die gegebenenfalls mit C₁-C₅ Alkyl, C₁-C₅ Alkoxy oder Halogen substituiert sind.

14. Verbindung nach Anspruch 12, worin R⁸ und R⁹ jeweils unabhängig voneinander Reste der Formel sind 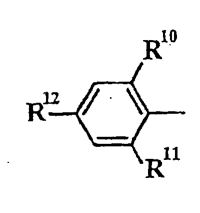 worin
R¹⁰, R¹¹ und R¹² jeweils unabhängig voneinander Wasserstoff, C₁-C₁₀ Alkyl, C₁-C₁₀ Alkoxy, Aryl oder eine funktionelle Gruppe sind, die ausgewählt ist aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

15. Verbindung nach Anspruch 14, worin R¹⁰, R¹¹ und R¹² gleich sind und jeweils Methyl sind.

16. Verbindung nach Anspruch 12, die aus der Gruppe ausgewählt ist, die besteht aus 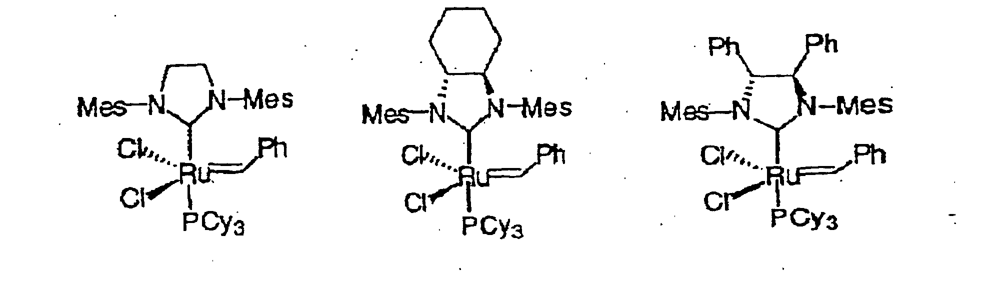 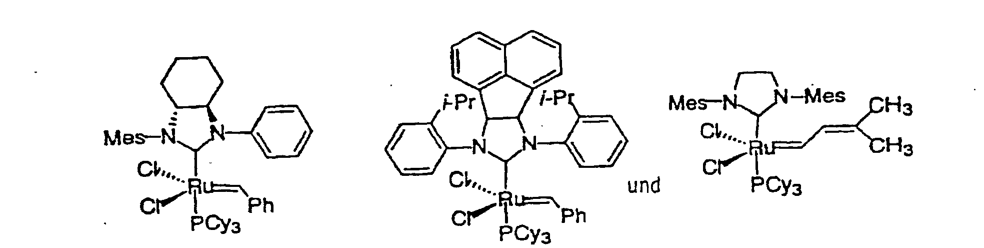 worin PCy₃ -P(cyclohexyl)₃ ist.

17. Verbindung der Formel 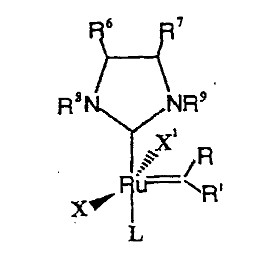 worin:
X und X¹ jeweils Chlorid sind;
L aus der Gruppe ausgewählt ist, die besteht aus -P(cyclohexyl)₃, -P(cyclopentyl)₃, -P(isopropyl)₃ und -P(phenyl)₃;
R Wasserstoff ist;
R¹ Phenyl oder -C=C(CH₃)₂ ist;
R⁶ und R⁷ jeweils unabhängig voneinander Wasserstoff oder Phenyl sind oder gemeinsam ein Cyclopentyl oder Cyclohexyl bilden; und
R⁸ und R⁹ jeweils unabhängig voneinander die Formel aufweisen 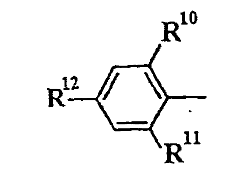
worin
- R¹⁰, R¹¹ und R¹² jeweils unabhängig voneinander Wasserstoff, Methyl, Ethyl, Propyl, Isopropyl, Hydroxy oder Halogen sind.

18. Verfahren zur Herstellung einer Verbindung der Formel 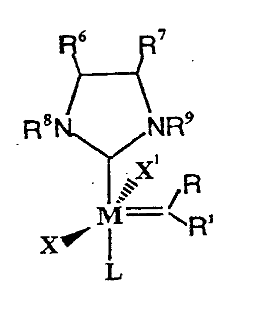 das das Umsetzen von 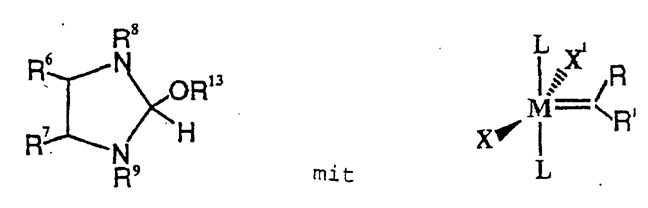 umfaßt, wobei:
M Ruthenium oder Osmium ist,
X und X¹ jeweils unabhängig voneinander ein anionischer Ligand sind;
L ein neutraler Elektronendonorligand ist;
R, R¹, R⁶, R⁷, R⁸ und R⁹ jeweils unabhängig voneinander Wasserstoff oder ein Substituent sind, der aus der Gruppe ausgewählt ist, die besteht aus C₁-C₂₀ Alkyl, C₂-C₂₀ Alkenyl, C₂-C₂₀ Alkinyl, Aryl, C₁-C₂₀ Carboxylat, C₁-C₂₀ Alkoxy, C₂-C₂₀ Alkenyloxy, C₂-C₂₀ Alkinyloxy, Aryloxy, C₂-C₂₀ Alkoxycarbonyl, C₁-C₂₀ Alkylthiol, Arylthiol, C₁-C₂₀ Alkylsulfonyl und C₁-C₂₀ Alkylsulfinyl, wobei der Substituent gegebenenfalls mit einer oder mehreren Einheiten substituiert ist, die aus der Gruppe ausgewählt sind, die besteht aus C₁-C₁₀ Alkyl, C₁-C₁₀ Alkoxy, Aryl und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen; und
R¹³ C₁-C₂₀ Alkyl oder Aryl ist.

19. Verfahren nach Anspruch 18, worin
M Ruthenium ist;
X und X¹ jeweils Chlorid sind;
L aus der Gruppe ausgewählt ist, die besteht aus -P(cyclohexyl)₃, -P(cyclopentyl)₃, -P(isopropyl)₃ und -P(phenyl)₃;
R Wasserstoff ist;
R¹ Phenyl oder -C=C(CH₃)₂ ist;
R⁶ und R⁷ jeweils unabhängig voneinander Wasserstoff oder Phenyl sind oder gemeinsam ein Cyclopentyl oder Cyclohexyl bilden; und
R⁸ und R⁹ jeweils unabhängig voneinander ein substituiertes oder unsubstituiertes Aryl sind.

20. Verfahren nach Anspruch 19, worin R¹³ t-Butyl ist.

21. Verfahren nach Anspruch 18, worin
M Ruthenium ist;
X und X¹ jeweils Chlorid sind;
L aus der Gruppe ausgewählt ist, die besteht aus -P(cyclohexyl)₃, -P(cyclopentyl)₃, -P(isopropyl)₃ und -P(phenyl)₃;
R Wasserstoff ist;
R¹ Phenyl oder -C=C(CH₃)₂ ist;
R⁶ und R⁷ gemeinsam eine Cycloalkylgruppe bilden; und
R⁸ und R⁹ gleich sind und jeweils Gruppen der Formel sind 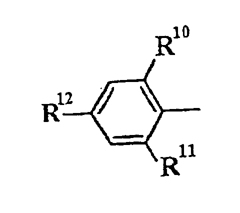
worin
R¹⁰, R¹¹ und R¹² jeweils unabhängig voneinander Wasserstoff, Methyl, Ethyl, Propyl, Isopropyl, Hydroxy oder Halogen sind.

22. Verfahren nach Anspruch 21, worin 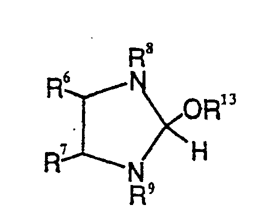 optisch aktiv ist.

23. Verfahren zur Herstellung eines Metathesekatalysators, das das Umsetzen einer Verbindung der Formel 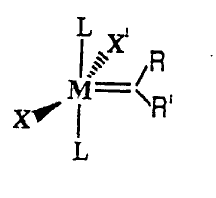 mit einem Imidazolidin umfaßt, wobei das Imidazolidin einen der L-Liganden ersetzt, worin:
M Ruthenium oder Osmium ist;
X und X¹ jeweils unabhängig voneinander ein anionischer Ligand sind;
L ein neutraler Elektronendonorligand ist; und
R und R¹ jeweils unabhängig voneinander Wasserstoff oder ein Substituent sind, der aus der Gruppe ausgewählt ist, die besteht aus C₁-C₂₀ Alkyl, C₂-C₂₀ Alkenyl, C₂-C₂₀ Alkinyl, Aryl, C₁-C₂₀ Carboxylat, C₁-C₂₀ Alkoxy, C₂-C₂₀ Alkenyloxy, C₂-C₂₀ Alkinyloxy, Aryloxy, C₂-C₂₀ Alkoxycarbonyl, C₁-C₂₀ Alkylthiol, Arylthiol, C₁-C₂₀ Alkylsulfonyl und C₁-C₂₀ Alkylsulfinyl, wobei der Substituent gegebenenfalls mit einer oder mehreren Einheiten substituiert ist, die aus der Gruppe ausgewählt sind, die besteht aus C₁-C₁₀ Alkyl, C₁-C₁₀ Alkoxy, Aryl und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

24. Verfahren nach Anspruch 23, wobei das Imidazolidin gebildet wird durch
Umsetzen eines sekundären Diamins mit Ammoniumtetrafluoroborat unter Bildung eines Imidazoliumsalzes; und
Umsetzen des Imidazoliumsalzes mit einem Alkyloxid, um das Imidazolidin zu bilden.

25. Verfahren nach Anspruch 24, wobei das sekundäre Diamin dadurch gebildet wird, daß man ein Diketon mit einem Amin umsetzt, um ein Diimin zu bilden, und das Diimin hydriert, um das sekundäre Diamin zu bilden.

26. Verfahren nach Anspruch 24, wobei das Alkyloxid t-Butoxid ist.

27. Verfahren nach Anspruch 24, wobei das Imidazolidin eines der Formel ist 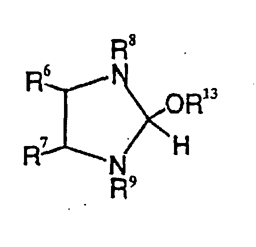 worin
R⁶, R⁷, R⁸ und R⁹ jeweils unabhängig voneinander Wasserstoff oder ein Substituent sind, der ausgewählt ist aus der Gruppe, die besteht aus C₁-C₂₀ Alkyl, C₂-C₂₀ Alkenyl, C₂-C₂₀ Alkinyl, Aryl, C₁-C₂₀ Carboxylat, C₁-C₂₀ Alkoxy, C₂-C₂₀ Alkenyloxy, C₂-C₂₀ Alkinyloxy, Aryloxy, C₂-C₂₀ Alkoxycarbonyl, C₁-C₂₀ Alkylthiol, Arylthiol, C₁-C₂₀ Alkylsulfonyl und C₁-C₂₀ Alkylsulfinyl, wobei der Substituent gegebenenfalls mit einer oder mehreren Einheiten substituiert ist, die aus der Gruppe ausgewählt sind, die besteht aus C₁-C₁₀ Alkyl, C₁-C₁₀ Alkoxy, Aryl und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen; und
R¹³ C₁-C₂₀ Alkyl oder Aryl ist.

28. Verfahren nach Anspruch 27, wobei
M Ruthenium ist;
X und X¹ jeweils Chlorid sind;
L aus der Gruppe ausgewählt ist, die besteht aus -P(cyclohexyl)₃, -P(cyclopentyl)₃, -P(isopropyl)₃ und -P(phenyl)₃;
R Wasserstoff ist; und
R¹ Phenyl oder Vinyl ist, gegebenenfalls substituiert mit einer oder mehreren Einheiten, die aus der Gruppe ausgewählt sind, die besteht aus C₁-C₅ Alkyl, C₁-C₅ Alkoxy, Phenyl und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

29. Verfahren nach Anspruch 28, worin R¹ Phenyl oder -C=C(CH₃)₂ ist und R¹³ t-Butoxid ist.

30. Verfahren nach Anspruch 28, worin
R⁶ und R⁷ jeweils unabhängig voneinander Wasserstoff oder Phenyl sind oder gemeinsam ein Cycloalkyl oder Aryl bilden, die gegebenenfalls mit einem oder mehreren Einheiten substituiert sind, die aus der Gruppe ausgewählt sind, die besteht aus C₁-C₁₀ Alkyl, C₁-C₁₀ Alkoxy, Aryl und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen, und
R⁸ und R⁹ jeweils unabhängig voneinander entweder substituiertes oder unsubstituiertes Aryl sind.

31. Verfahren nach Anspruch 30, wobei R⁸ und R⁹ jeweils unabhängig voneinander Reste der Formel sind 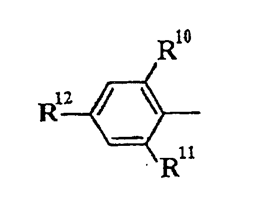 worin
R¹⁰, R¹¹ und R¹² jeweils unabhängig voneinander Wasserstoff, Methyl, Ethyl, Propyl, Isoproyl, Hydroxy und Halogen sind.

32. Verfahren zur Durchführung einer Metathesereaktion, das das Umsetzen eines Olefins mit einer Verbindung der Formel 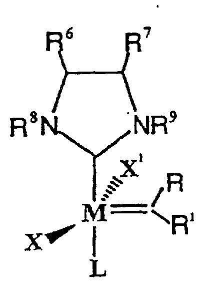 umfaßt, worin:
M Ruthenium oder Osmium ist;
X und X¹ jeweils unabhängig voneinander ein anionischer Ligand sind;
L ein neutraler Elektronendonorligand ist; und
R, R¹, R⁶, R⁷, R⁸ und R⁹ jeweils unabhängig voneinander Wasserstoff oder ein Substituent sind, der aus der Gruppe ausgewählt ist, die besteht aus C₁-C₂₀ Alkyl, C₂-C₂₀ Alkenyl, C₂-C₂₀ Alkinyl, Aryl, C₁-C₂₀ Carboxylat, C₁-C₂₀ Alkoxy, C₂-C₂₀ Alkenyloxy, C₂-C₂₀ Alkinyloxy, Aryloxy, C₂-C₂₀ Alkoxycarbonyl, C₁-C₂₀ Alkylthiol, Arylthiol, C₁-C₂₀ Alkylsulfonyl und C₁-C₂₀ Alkylsulfinyl, wobei der Substituent gegebenenfalls mit einer oder mehreren Einheiten substituiert ist, die ausgewählt sind aus der Gruppe, die besteht aus C₁-C₁₀ Alkyl, C₁-C₁₀ Alkoxy, Aryl und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

33. Verfahren nach Anspruch 32, worin:
M Ruthenium ist;
X und X¹ jeweils Chlorid sind;
L aus der Gruppe ausgewählt ist, die besteht aus -P(cyclohexyl)₃, -P(cyclopentyl)₃, -P(isopropyl)₃ und -P(phenyl)₃;
R Wasserstoff ist;
R¹ Phenyl oder Vinyl ist, gegebenenfalls substituiert mit einer oder mehreren Einheiten, die aus der Gruppe ausgewählt sind, die besteht aus C₁-C₅ Alkyl, C₁-C₅ Alkoxy, Phenyl und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen;
R⁶ und R⁷ jeweils unabhängig voneinander Wasserstoff oder Phenyl sind oder gemeinsam ein Cycloalkyl oder Aryl bilden, die gegebenenfalls mit einer oder mehreren Einheiten substituiert sind, die aus der Gruppe ausgewählt sind, die besteht aus C₁-C₁₀ Alkyl, C₁-C₁₀ Alkoxy, Aryl und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen; und
R⁸ und R⁹ jeweils unabhängig voneinander C₁-C₁₀ Alkyl oder Aryl sind, die gegebenenfalls substituiert sind mit C₁-C₅ Alkyl, C₁-C₅ Alkoxy, Aryl und einer funktionellen Gruppe, die aus der Gruppe ausgewählt ist, die besteht aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

34. Verfahren nach Anspruch 32, wobei die Verbindung aus der Gruppe ausgewählt ist, die besteht aus

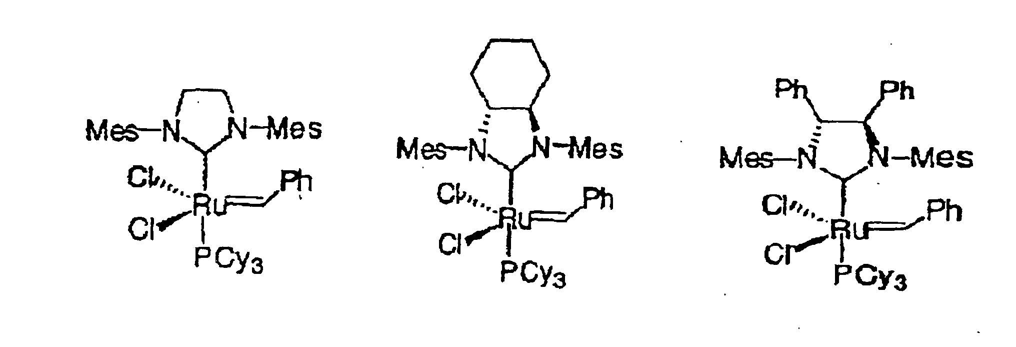

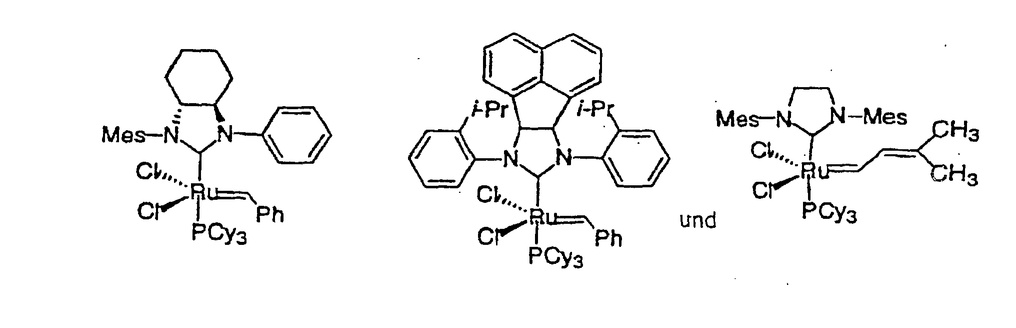

35. Verfahren nach Anspruch 33, wobei das Olefin ein cyclisches Olefin ist.

36. Verfahren nach Anspruch 32, wobei das Olefin cyclisch oder acyclisch ist.

37. Verfahren nach Anspruch 32, wobei das Olefin wenigstens eine Elektronen-abziehende Gruppe trägt.

## Revendications

1. Composé répondant à la formule 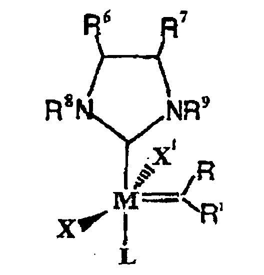 dans laquelle :
M représente un atome de ruthénium ou d'osmium ;
X et X¹ représentent chacun indépendamment un ligand anionique ;
L représente un ligand donneur d'électrons neutre ; et
R, R¹, R⁶, R⁷, R⁸ et R⁹ représentent chacun indépendamment un atome d'hydrogène ou un substituant choisi dans le groupe constitué des groupes alkyle en C₁ à C₂₀, alcényle en C₂ à C₂₀, alcynyle en C₂ à C₂₀, aryle, carboxylate en C₁ à C₂₀, alcoxy en C₁ à C₂₀, alcényloxy en C₂ à C₂₀, alcynyloxy en C₂ à C₂₀, aryloxy, alcoxycarbonyle en C₂ à C₂₀, alkylthiol en C₁ à C₂₀, arylthiol, alkylsulfonyle en C₁ à C₂₀ et alkylsulfinyle en C₁ à C₂₀, le substituant étant éventuellement substitué par une ou plusieurs entités choisies dans le groupe constitué des groupes alkyle en C₁ à C₁₀, alcoxy en C₁ à C₁₀, aryle et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène.

2. Composé selon la revendication 1, dans lequel :
M représente un atome de ruthénium ;
L est choisis dans le groupe constitué des groupes phosphine, phosphine sulfonée, phosphite, phosphinite, phosphonite, arsine, stibine, éther, amine, amide, imine, sulfoxyde, carboxyle, nitrosyle, pyridine et thioéther ; et
X et X¹ représentent chacun indépendamment un atome d'hydrogène, un halogénure, ou un substituant choisi dans le groupe constitué des groupes alkyle en C₁ à C₂₀, aryle, alcoxyde en C₁ à C₂₀, aryloxyde, alkyldicétonate C₃ à C₂₀, aryldicétonate, carboxylate en C₁ à C₂₀, arylsulfonate, alkylsulfonate en C₁ à C₂₀, alkylthiol en C₁ à C₂₀, arylthiol, alkylsulfonyle en C₁ à C₂₀ et alkylsulfinyle en C₁ à C₂₀, le substituant étant éventuellement substitué par une ou plusieurs entités choisies dans le groupe constitué des groupes alkyle en C₁ à C₁₀, alcoxy en C₁ à C₁₀, aryle et halogénure.

3. Composé selon la revendication 1, dans lequel :
M représente un atome de ruthénium ;
X¹ et X² sont chacun indépendamment choisis dans le groupe constitué des groupes halogénure, CF₃CO₂, CH₃CO₂, CFH₂CO₂, (CH₃)₃CO, (CF₃)₂(CH₃)CO, (CF₃)(CH₃)₂CO, PhO, MeO, EtO, tosylate, mésylate et trifluorométhanesulfonate ;
L représente une phosphine répondant à la formule PR³R⁴R⁵, dans laquelle R³, R⁴ et R⁵ représentent chacun indépendamment les groupes aryle, alkyle en C₁ à C₁₀ ou cycloalkyle ;
R représente un atome d'hydrogène ; et
R¹ représente un groupe phényle ou vinyle, éventuellement substitué par une ou plusieurs entités choisies dans le groupe constitué des groupes alkyle en C₁ à C₅, alcoxy en C₁ à C₅, phényle, et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène.

4. Composé selon la revendication 3, dans lequel
X et X¹ représentent chacun un chlorure ;
L est choisi dans le groupe constitué des groupes -P(cyclohexyl)₃, -P(cyclopentyl)₃, -P(isopropyl)₃ et -P(phényl)₃ ; et
R¹ représente un groupe phényle ou -C=C(CH₃)₂.

5. Composé selon la revendication 4, dans lequel R⁶ et R⁷ forment ensemble un groupe cycloalkyle ou aryle.

6. Composé selon la revendication 4, dans lequel R⁶ et R⁷ forment ensemble une entité cyclopentyle ou cyclohexyle.

7. Composé selon la revendication 4, dans lequel R⁶ et R⁷ sont identiques et représentent un atome d'hydrogène ou un groupe phényle.

8. Composé selon la revendication 4, dans lequel R⁸ et R⁹ représentent chacun indépendamment un groupe aryle substitué ou non substitué.

9. Composé selon la revendication 4, dans lequel R⁸ et R⁹ sont identiques et représentent un groupe phényle.

10. Composé selon la revendication 4, dans lequel R⁸ et R⁹ répondent chacun indépendamment à la formule 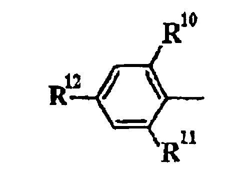 dans laquelle :
R¹⁰, R¹¹ et R¹² représentent chacun indépendamment un atome d'hydrogène, les groupes alkyle en C₁ à C₁₀, alcoxy en C₁ à C₁₀, aryle, ou un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène.

11. Composé selon la revendication 10, dans lequel R¹⁰, R¹¹ et R¹² représentent chacun indépendamment un atome d'hydrogène, un groupe méthyle ou isopropyle.

12. Composé répondant à la formule 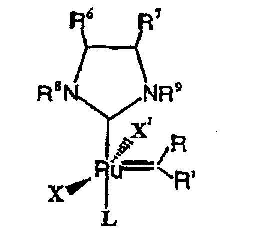 dans laquelle :
X et X¹ représentent chacun un chlorure ;
L est choisi dans le groupe constitué des groupes -P(cyclohexyl)₃, -P(cyclopentyl)₃, -P(isopropyl)₃ et -P(phényl)₃ ;
R représente un atome d'hydrogène ;
R¹ représente un groupe phényle ou vinyle, éventuellement substitué par une ou plusieurs entités choisies dans le groupe constitué des groupes alkyle en C₁ à C₅, alcoxy en C₁ à C₅, phényle, et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène ;
R⁶ et R⁷ représentent chacun indépendamment un atome d'hydrogène, un groupe phényle, ou forment ensemble un groupe cycloalkyle ou un groupe aryle éventuellement substitué par une ou plusieurs entités choisies dans le groupe constitué des groupes alkyle en C₁ à C₁₀, alcoxy en C₁ à C₁₀, aryle, et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène ; et
R⁸ et R⁹ représentent chacun indépendamment un groupe alkyle en C₁ à C₁₀ ou un groupe aryle éventuellement substitué par les groupes alkyle en C₁ à C₅, alcoxy en C₁ à C₅, aryle, et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène.

13. Composé selon la revendication 12, dans lequel R⁸ et R⁹ représentent chacun indépendamment un groupe cycloalkyle ou un groupe phényle éventuellement substitué par les groupes alkyle en C₁ à C₅, alcoxy en C₁ à C₅ ou un atome d'halogène.

14. Composé selon la revendication 12, dans lequel R⁸ et R⁹ répondent chacun indépendamment à la formule 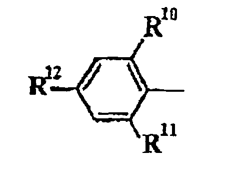 dans laquelle
R¹⁰, R¹¹ et R¹² représentent chacun indépendamment un atome d'hydrogène, les groupes alkyle en C₁ à C₁₀, alcoxy en C₁ à C₁₀, aryle, ou un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène.

15. Composé selon la revendication 14, dans lequel R¹⁰, R¹¹ et R¹² sont identiques et représentent chacun un groupe méthyle.

16. Composé selon la revendication 12, choisi dans le groupe constitué de 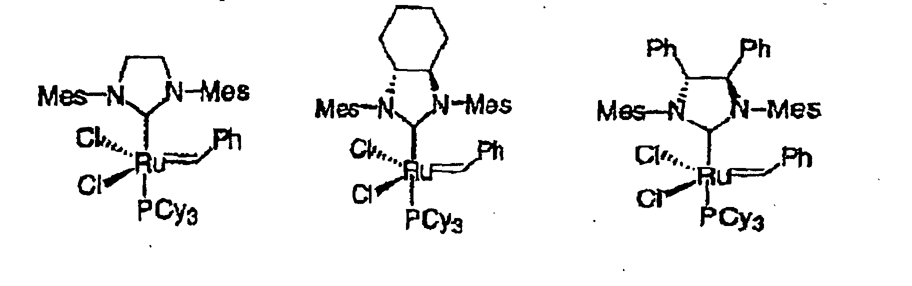 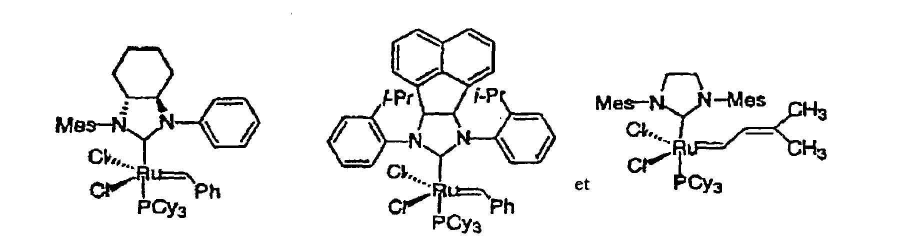 où PCy₃ représente un groupe -P(cyclohexyl)₃.

17. Composé répondant à la formule 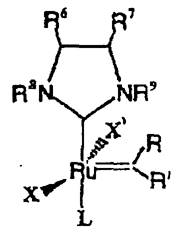 dans laquelle
X et X¹ représentent chacun un chlorure ;
L est choisi dans le groupe constitué des groupes -P(cyclohexyl)₃, -P(cyclopentyl)₃, -P(isopropyl)₃ et -P(phényl)₃ ;
R représente un atome d'hydrogène ;
R¹ représente un groupe phényle ou -C=C(CH₃)₂ ;
R⁶ et R⁷ représentent chacun indépendamment un atome d'hydrogène, un groupe phényle, ou forment ensemble un groupe cyclopentyle ou cyclohexyle ; et
R⁸ et R⁹ répondent chacun indépendamment à la formule 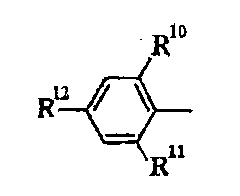
dans laquelle
R¹⁰, R¹¹ et R¹² représentent chacun indépendamment un atome d'hydrogène, les groupes méthyle, éthyle, propyle, isopropyle, hydroxyle et halogène.

18. Procédé de préparation d'un composé répondant à la formule 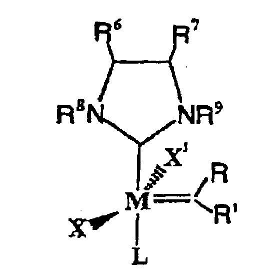 comprenant la mise en contact de 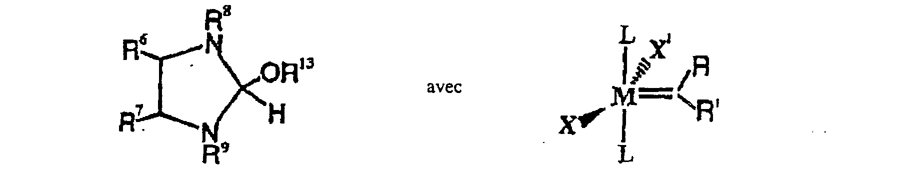 où :
M représente un atome de ruthénium ou d'osmium ;
X et X¹ représentent chacun indépendamment un ligand anionique ;
L représente un ligand donneur d'électrons neutre ;
R, R¹, R⁶, R⁷, R⁸ et R⁹ représentent chacun indépendamment un atome d'hydrogène ou un substituant choisi dans le groupe constitué des groupes alkyle en C₁ à C₂₀, alcényle en C₂ à C₂₀, alcynyle en C₂ à C₂₀, aryle, carboxylate en C₁ à C₂₀, alcoxy en C₁ à C₂₀, alcényloxy en C₂ à C₂₀, alcynyloxy en C₂ à C₂₀, aryloxy, alcoxycarbonyle en C₂ à C₂₀, alkylthiol en C₁ à C₂₀, arylthiol, alkylsulfonyle en C₁ à C₂₀ et alkylsulfinyle en C₁ à C₂₀, le substituant étant éventuellement substitué par une ou plusieurs entités choisies dans le groupe constitué des groupes alkyle en C₁ à C₁₀, alcoxy en C₁ à C₁₀, aryle, et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène ; et
R¹³ représente un groupe alkyle en C₁ à C₂₀ ou un groupe aryle.

19. Procédé selon la revendication 18, dans lequel
M représente un atome de ruthénium ;
X et X¹ représentent chacun un chlorure ;
L est choisi dans le groupe constitué des groupes -P(cyclohexyl)₃, -P(cyclopentyl)₃, -P(isopropyl)₃ et -P(phényl)₃ ;
R représente un atome d'hydrogène ;
R¹ représente un groupe phényle ou -C=C(CH₃)₂ ;
R⁶ et R⁷ représentent chacun indépendamment un atome d'hydrogène, un groupe phényle, ou forment ensemble un groupe cyclopentyle ou cyclohexyle ; et
R⁸ et R⁹ représentent chacun indépendamment un groupe aryle substitué ou non substitué.

20. Procédé selon la revendication 19, dans lequel R¹³ représente un groupe t-butyle.

21. Procédé selon la revendication 18, dans lequel
M représente un atome de ruthénium ;
X et X¹ représentent chacun un chlorure ;
L est choisi dans le groupe constitué des groupes -P(cyclohexyl)₃, -P(cyclopentyl)₃, -P(isopropyl)₃ et -P(phényl)₃ ;
R représente un atome d'hydrogène ;
R¹ représente un groupe phényle ou -C=C(CH₃)₂ ;
R⁶ et R⁷ forment ensemble un groupe cycloalkyle ; et
R⁸ et R⁹ sont identiques et répondent chacun à la formule 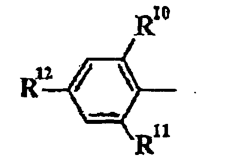
dans laquelle
R¹⁰, R¹¹ et R¹² représentent chacun indépendamment un atome d'hydrogène, les groupes méthyle, éthyle, propyle, isopropyle, hydroxyle et halogène.

22. Procédé selon la revendication 21, dans lequel 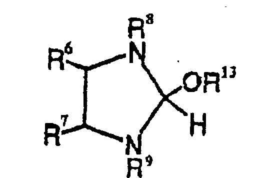 est optiquement actif.

23. Procédé de préparation d'un catalyseur de métathèse comprenant la mise en contact d'un composé répondant à la formule 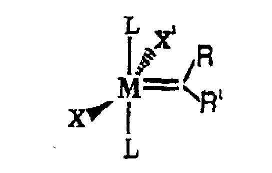 avec une imidazolidine moyennant quoi l'imidazolidine remplace l'un des ligands L, dans laquelle :
M représente un atome de ruthénium ou d'osmium ;
X et X¹ représentent chacun indépendamment un ligand anionique ;
L représente un ligand donneur d'électrons neutre ; et
R et R¹ représentent chacun indépendamment un atome d'hydrogène ou un substituant choisi dans le groupe constitué des groupes alkyle en C₁ à C₂₀, alcényle en C₂ à C₂₀, alcynyle en C₂ à C₂₀, aryle, carboxylate en C₁ à C₂₀, alcoxy en C₁ à C₂₀, alcényloxy en C₂ à C₂₀, alcynyloxy en C₂ à C₂₀, aryloxy, alcoxycarbonyle en C₂ à C₂₀, alkylthiol en C₁ à C₂₀, arylthiol, alkylsulfonyle en C₁ à C₂₀ et alkylsulfinyle en C₁ à C₂₀, le substituant étant éventuellement substitué par une ou plusieurs entités choisies dans le groupe constitué des groupes alkyle en C₁ à C₁₀, alcoxy en C₁ à C₁₀, aryle, et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène.

24. Procédé selon la revendication 23, dans lequel l'imidazolidine est formée par
mise en contact d'une diamine secondaire avec du tétrafluoroborate d'ammonium pour former un sel d'imidazolium ; et
mise en contact du sel d'imidazolium avec un alkyloxyde pour former l'imidazolidine.

25. Procédé selon la revendication 24, dans lequel la diamine secondaire est formée par
mise en contact d'une dicétone avec une amine pour former une diimine et
hydrogénation de la diimine pour former la diamine secondaire.

26. Procédé selon la revendication 24, dans lequel l'alkyloxyde est le t-butoxyde.

27. Procédé selon la revendication 24, dans lequel l'imidazolidine répond à la formule 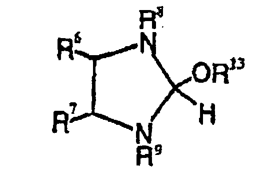 dans laquelle
R⁶, R⁷, R⁸ et R⁹ représentent chacun indépendamment un atome d'hydrogène
ou un substituant choisi dans le groupe constitué des groupes alkyle en C₁ à C₂₀, alcényle en C₂ à C₂₀, alcynyle en C₂ à C₂₀, aryle, carboxylate en C₁ à C₂₀, alcoxy en C₁ à C₂₀, alcényloxy en C₂ à C₂₀, alcynyloxy en C₂ à C₂₀, aryloxy, alcoxycarbonyle en C₂ à C₂₀, alkylthiol en C₁ à C₂₀, arylthiol, alkylsulfonyle en C₁ à C₂₀ et alkylsulfinyle en C₁ à C₂₀, le substituant étant éventuellement substitué par une ou plusieurs entités choisies dans le groupe constitué des groupes alkyle en C₁ à C₁₀, alcoxy en C₁ à C₁₀, aryle, et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène ; et
R¹³ représente un groupe alkyle en C₁ à C₂₀ ou un groupe aryle.

28. Procédé selon la revendication 27, dans lequel
M représente un atome de ruthénium ;
X et X¹ représentent chacun un chlorure ;
L est choisi dans le groupe constitué des groupes -P(cyclohexyl)₃, -P(cyclopentyl)₃, -P(isopropyl)₃ et -P(phényl)₃ ;
R représente un atome d'hydrogène ; et
R¹ représente un groupe phényle ou vinyle, éventuellement substitué par une ou plusieurs entités choisies dans le groupe constitué des groupes alkyle en C₁ à C₅, alcoxy en C₁ à C₅, phényle, et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène.

29. Procédé selon la revendication 28, dans lequel R¹ représente un groupe phényle ou -C=C(CH₃)₂ et R¹³ représente un groupe t-butoxyde.

30. Procédé selon la revendication 28, dans lequel
R⁶ et R⁷ représentent chacun indépendamment un atome d'hydrogène, un groupe phényle, ou forment ensemble un groupe cycloalkyle ou un groupe aryle éventuellement substitué par une ou plusieurs entités choisies dans le groupe constitué des groupes alkyle en C₁ à C₁₀, alcoxy en C₁ à C₁₀, aryle, et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène ; et
R⁸ et R⁹ représentent chacun indépendamment un groupe aryle substitué ou non substitué.

31. Procédé selon la revendication 30, dans lequel R⁸ et R⁹ répondent chacun indépendamment à la formule 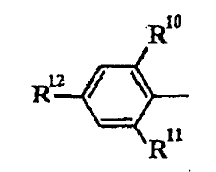 dans laquelle :
R¹⁰, R¹¹ et R¹² représentent chacun indépendamment un atome d'hydrogène, les groupes méthyle, éthyle, propyle, isopropyle, hydroxyle et halogène.

32. Procédé de mise en oeuvre d'une réaction de métathèse comprenant la mise en contact d'une oléfine avec un composé répondant à la formule 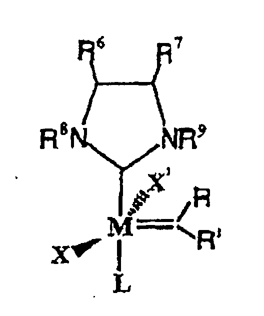 dans laquelle
M représente un atome de ruthénium ou d'osmium ;
X et X¹ représentent chacun indépendamment un ligand aniomque ;
L représente un ligand donneur d'électrons neutre ; et
R, R¹, R⁶, R⁷, R⁸ et R⁹ représentent chacun indépendamment un atome d'hydrogène ou un substituant choisi dans le groupe constitué des groupes alkyle en C₁ à C₂₀, alcényle en C₂ à C₂₀, alcynyle en C₂ à C₂₀, aryle, carboxylate en C₁ à C₂₀, alcoxy en C₁ à C₂₀, alcényloxy en C₂ à C₂₀, alcynyloxy en C₂ à C₂₀, aryloxy, alcoxycarbonyle en C₂ à C₂₀, alkylthiol en C₁ à C₂₀, arylthiol, alkylsulfonyle en C₁ à C₂₀ et alkylsulfinyle en C₁ à C₂₀, le substituant étant éventuellement substitué par une ou plusieurs entités choisies dans le groupe constitué des groupes alkyle en C₁ à C₁₀, alcoxy en C₁ à C₁₀, aryle, et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène.

33. Procédé selon la revendication 32, dans lequel
M représente un atome de ruthénium ;
X et X¹ représentent chacun un chlorure ;
L est choisi dans le groupe constitué des groupes -P(cyclohexyl)₃, -P(cyclopentyl)₃, -P(isopropyl)₃ et -P(phényl)₃ ;
R représente un atome d'hydrogène ;
R¹ représente un groupe phényle ou vinyle, éventuellement substitué par une ou plusieurs entités choisies dans le groupe constitué des groupes alkyle en C₁ à C₅, alcoxy en C₁ à C₅, phényle et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène ;
R⁶ et R⁷ représentent chacun indépendamment un atome d'hydrogène, un groupe phényle, ou forment ensemble un groupe cycloalkyle ou un groupe aryle éventuellement substitué par une ou plusieurs entités choisies dans le groupe constitué des groupes alkyle en C₁ à C₁₀, alcoxy en C₁ à C₁₀, aryle, et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène ; et
R⁸ et R⁹ représentent chacun indépendamment un groupe alkyle en C₁ à C₁₀ ou un groupe aryle éventuellement substitué par un groupe alkyle en C₁ à C₅, alcoxy en C₁ à C₅, aryle, et un groupe fonctionnel choisi dans le groupe constitué des groupes hydroxyle, thiol, thioéther, cétone, aldéhyde, ester, éther, amine, imine, amide, nitro, acide carboxylique, disulfure, carbonate, isocyanate, carbodiimide, carboalcoxy, carbamate et halogène.

34. Procédé selon la revendication 32, dans lequel le composé est choisi dans le groupe constitué de

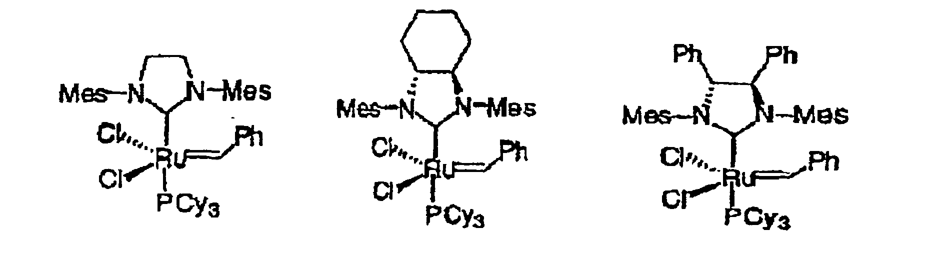

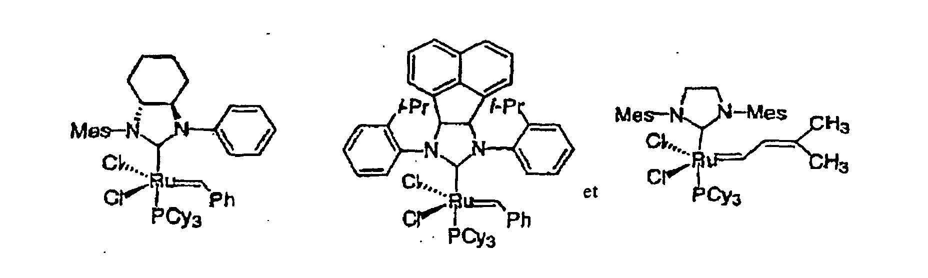

35. Procédé selon la revendication 33, dans lequel l'oléfine est une oléfine cyclique.

36. Procédé selon la revendication 32, dans lequel l'oléfine est cyclique ou acyclique.

37. Procédé selon la revendication 32, dans lequel l'oléfine supporte au moins un groupe attracteur d'électrons.
